# EUROPEAN PATENT SPECIFICATION

(11) **EP 3 122 555 B1**
(45) Date of publication and mention of the grant of the patent: **12.02.2020**
(21) Application number: 15713042.8
(22) Date of filing: 25.02.2015
(51) Int. Cl.: B32B 7/12, B32B 27/06, B32B 27/30, B32B 27/34, B32B 5/32

(54) **MULTILAYER FILM INCLUDING FOAM LAYER AND GAS BARRIER LAYER**
MEHRSCHICHTIGE FOLIE MIT SCHAUMSTOFFSCHICHT UND GASSPERRSCHICHT
FILM MULTICOUCHES COMPRENANT UNE COUCHE DE MOUSSE ET UNE COUCHE FORMANT UNE BARRIÈRE CONTRE LES GAZ

(30) Priority: 26.03.2014 US 201414226260
(43) Date of publication of application: 01.02.2017
(73) Proprietor: Hollister Incorporated, Libertyville, IL 60048 (US)
(72) Inventor: CHANG, Moh-Ching Oliver, Lake in the Hills, IL 60156 (US)
(74) Representative: FRKelly
(86) International application number: PCT/US2015/017503
(87) International publication number: WO 2015/148035

(56) References cited:
- EP-A2- 0 958 916
- WO-A1-01/00408
- WO-A1-2007/093186
- WO-A1-2014/116444
- JP-A- 2005 255 830
- US-A1- 2010 330 356

## Description

### BACKGROUND

The present disclosure relates to multilayer films for ostomy products, and more particularly to multilayer films including a foamed layer having sound absorbing properties.

An example of a multilayer film is disclosed in WO 2014/116444 A1, which is assigned to the assignee of the present application.

Ostomy appliances for collecting body waste, such as ostomy pouches, are used by patients who have had surgery such as a colostomy, ileostomy, or urostomy. Typically, an ostomy pouch includes two opposing walls, which are sealed around peripheral edges to define a cavity to collect body waste. Nonwovens have been commonly used with odor barrier films to make ostomy pouches. One example is a "3-layer" ostomy pouch including two layers of odor barrier films forming the opposing walls, and a nonwoven layer attached to the body side wall of the ostomy pouch. The nonwoven functions as a comfort panel to give soft touch feel to users and to reduce the wet slippery feel when the user perspires. Another example is a "4-layer" ostomy pouch including two layers of odor barrier films forming the opposing walls and two nonwoven layers, one attached to each of the walls. Another example of an ostomy appliance is known from WO 2007/093186.

Although nonwovens provide added comfort for users, there are some challenges in making ostomy pouches with nonwovens. For example, thickness variances for nonwovens are relatively greater than polymer films, which present process challenges in making ostomy pouches. Further, the process of maintaining consistent tension between a nonwoven and a film, and providing sufficient and precise energy to heat seal the nonwoven and the film are typically more complicated than between two polymeric films. Furthermore, the relatively high cost of nonwovens increases the cost to manufacture ostomy pouches which may result in increased costs to the user.

Another disadvantage of using nonwoven for ostomy pouches is that water can permeate through the nonwoven layer when a user takes a shower or swims. Further, when the nonwoven layer and the film layer are not laminated together, for example, sealed around their respective perimeters, the nonwoven layer is not very effective in reducing film noise.

In addition to providing comfort and softness, it is also highly desirable that ostomy pouches do not make noise during use for obvious reasons. Ostomy pouches that include a quiet film to reduce the noise produced by the pouches, for example, the plastic crackling sound made by the pouch when a user moves around, have been developed. Examples of such a quiet film include the multilayer films disclosed in Giori, US 7,270,860, which is assigned to the assignee of the present application.

When body waste is released from a stoma, flatus gas is often released together with the waste. The flatus gas passing through the stoma can cause a vibratory transient in body tissue, which is uncontrollable by the patient. Such release of the flatus gas from the stoma can accompany indiscreet noise, which can cause embarrassment to the patient. Conventional quiet films, however, could be improved upon to better insulate the flatus noise to prevent embarrassment.

Because of the inherent severe medical, social, and personal concerns related to the need for use of an ostomy appliance, improvements in ostomy appliances are desired. Any appreciable improvement in such ostomy appliances to provide greater discretion, privacy and comfort is of great importance in the quality of life of the increasing number of ostomy patients. The present disclosure provides improved ostomy appliances including a foam material that can replace conventional nonwoven layers according to various embodiments, to provide comfort and enhanced sound insulating properties.

### BRIEF SUMMARY

A multilayer film including a gas barrier layer and an outer foam layer is provided according to various embodiments of the present disclosure. The multilayer film can provide unique texture, softness, quietness, gas barrier properties, light weight for thickness, and low cost per volume. Further, one or more layers of the multilayer film contain a vinyl-bond rich triblock copolymer to provide improved sound absorbing properties. Thus, the multilayer film can be used to make ostomy pouches. Further, the multilayer film can be useful in other applications, such as food packaging films, oxygen/carbon dioxide/nitrogen barrier films, medical packaging films and as an alternative to nonwoven material.

A multilayer film according to claim 1 and including an outer foam layer and a gas barrier layer is provided. The multilayer film includes two outer layers, at least one tie layer, at least one inner layer, and a gas barrier layer, with the gas barrier layer being arranged between the outer layers, and at least one of the outer layers being a foam layer, with the multilayer film having an elastic modulus of 13.78 MPa (2 ksi) to 275.6 MPa (40 ksi) when measured according to ASTM D882, and with at least one of the outer foam layer, inner layers, tie layers, and barrier layer comprising a vinyl-bond rich triblock copolymer.

In one embodiment, the multilayer film may be configured as a six-layer film having a seal layer/tie layer/barrier layer/tie layer/inner layer/outer foam layer construction, or a seal layer/inner layer/tie layer/barrier layer/tie layer/outer foam layer construction. The inner layer may or may not be a foam layer.

In another embodiment, the multilayer film may be configured as a seven-layer film having a seal layer/tie layer/barrier layer/tie layer/inner layer/inner layer/outer foam layer construction, or a seal layer/inner layer/tie layer/barrier layer/tie layer/inner layer/outer foam layer construction. At least one of the inner layers may be a foam layer.

In yet another embodiment, the multilayer film may be configured as a five-layer film having a seal layer/tie layer/barrier layer/tie layer/outer foam layer construction.

The outer foam layer of any of the multilayer film embodiments may be formed from ethylene vinyl acetate (EVA), ethylene methyl acrylate (EMA), ethylene alpha olefin copolymers (ethylene based plastomers), ethylene based elastomers (olefin block copolymers, OBC), ethylene-propylene (EP) copolymers (PP-elastomer) or blends thereof. In one embodiment, the gas barrier layer is formed from a polymer blend comprising an amorphous polyamide and a functionalized rubber blend or compound. In some embodiments, at least one of the outer foam layer, inner layers, tie layers, and barrier layer may include a vinyl-bond rich triblock copolymer.

The multilayer layer film according to any of the embodiments may be configured to have a thickness of about 100µm to about 500µm.

In another aspect, a multilayer film comprising at least one foam layer, a gas barrier layer, and at least one tie layer is provided, in which the tie layer is formed from a polymeric mixture comprising at least one vinyl-bond rich triblock copolymer.

The polymeric mixture for the tie layer may comprise about 50 wt.% to about 99 wt.% of at least one vinyl-bond rich triblock copolymer. In some embodiments, the polymeric mixture may include a vinyl-bond rich SIS block copolymer and a vinyl-bond rich SEPS block copolymer. For example, the tie layer may be formed from a polymeric mixture comprising about 25 wt.% to about 60 wt.% vinyl-bond rich SIS block copolymer, 25 wt.% to about 60 wt.% vinyl-bond rich SEPS block copolymer, about 1 wt.% to about 40% maleated LLDPE, and about 0 wt.% to about 5wt.% antioxidant masterbatch.

The multilayer film may be a seven layer film having a foam layer/inner layer/tie layer/gas barrier layer/tie layer/inner layer/seal layer configuration. In one embodiment, the multilayer film has a thickness of about 120µm to about 160µm and a film noise level in A-weighted sound pressure level (SPL (A)) of about 35dB to about 60dB, which is measured using a proprietary Hollister test method.

Any of the multilayer film embodiments comprising at least one foam layer, a gas barrier layer, and at least one tie layer formed from a polymeric mixture comprising at least one vinyl-bond rich triblock copolymer may be used to make an ostomy pouch. The ostomy pouch includes a first wall and a second wall, in which the first wall and the second wall are sealed along their peripheral edges to define a cavity. At least one of the first wall and the second wall may be formed from the foregoing multilayer film embodiments.

Other aspects, objectives and advantages will become more apparent from the following detailed description when taken in conjunction with the accompanying drawings.

### BRIEF DESCRIPTION OF THE DRAWINGS

The benefits and advantages of the present embodiments will become more readily apparent to those of ordinary skill in the relevant art after reviewing the following detailed description and accompanying drawings, wherein:
FIG. 1 is a cross-sectional illustration of a prior art ostomy appliance;
FIG. 2 is a cross-sectional illustration of an ostomy pouch according to an embodiment of the present disclosure;
FIG. 3 is a cross-sectional illustration of a six-layer composite film according to an embodiment;
FIG. 4 is a cross-sectional illustration a seven-layer composite film according to an embodiment;
FIG. 5 is a graph showing sound transmission loss data for composite film samples;
FIG. 6 is a cross-sectional illustration of a five-layer composite film according to an embodiment;
FIG. 7 is a cross-sectional illustration of an ostomy pouch according to another embodiment of the present disclosure; and
FIG. 8 is a graph showing film noise data in a-weighted sound pressure level for composite film samples;
FIG. 9 is a graph showing film noise data in mean overall sound pressure level for composite film samples;
FIG. 10 is a graph showing sound transmission loss data for laminate samples including barium sulfate;
FIG. 11 is graph showing sound transmission loss data for laminate samples including talc;
FIG. 12 is a cross-sectional illustration of a seven-layer film according to an embodiment;
FIG. 13 is a cross-sectional illustration of a six-layer film according to an embodiment; and
FIG. 14 is a cross-sectional illustration of a six-layer film according to another embodiment.

### DETAILED DESCRIPTION

While the present disclosure is susceptible of embodiment in various forms, there is shown in the drawings and will hereinafter be described a presently preferred embodiment with the understanding that the present disclosure is to be considered an exemplification and is not intended to limit the disclosure to the specific embodiment illustrated.

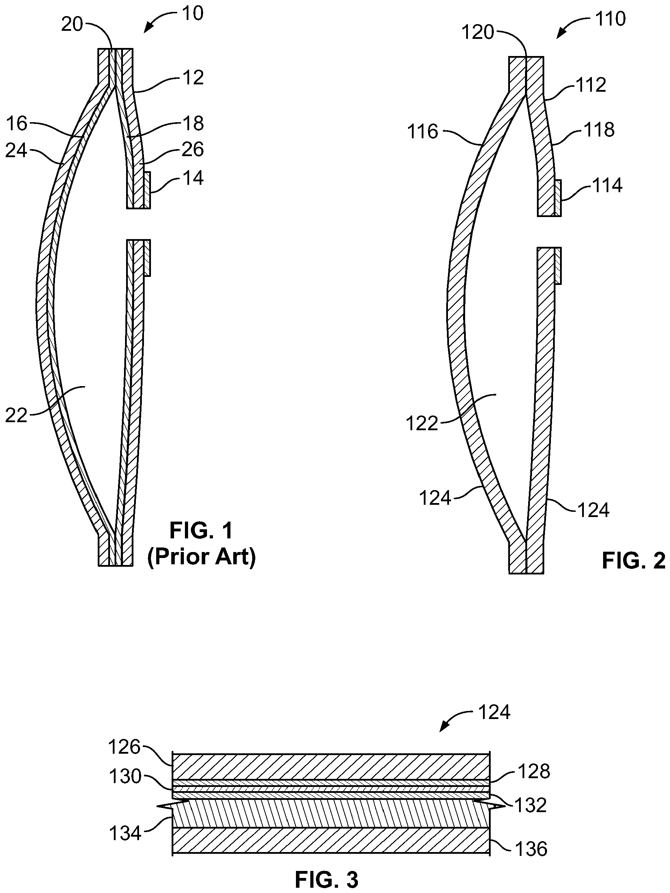

FIG. 1 is a cross-sectional illustration of a prior art one-piece ostomy pouch 10. The ostomy pouch 10 generally includes a pouch 12 and a skin barrier 14. The pouch 12 includes first and second opposing walls 16, 18, which are sealed around peripheral edges 20 thereof to define a cavity 22 for collecting body waste. The pouch 12 also includes a first nonwoven layer 24 attached to the first wall 16, and a second nonwoven layer 26 attached to the second wall 18. The nonwoven layers 24, 26 are attached to the respective walls 16, 18 via heat sealing or an adhesive. Each of the first and second walls 16, 18 is formed of a suitable odor barrier film, which may be a single layer film or a multilayer film.

Typically, each side of the pouch is configured to have a total thickness of about 10mil to about 16mil. For example, each side includes a nonwoven layer heat sealed to a wall, in which the wall has a thickness of about 3mil and the nonwoven layer has a thickness of about 11mil to provide a total thickness of about 14mil. In another example, each side includes a nonwoven layer attached to a wall by an adhesive therebetween, in which the wall has a thickness of about 2.25mil, and the adhesive has a thickness of about 1.1 mil, and the nonwoven layer has a thickness of about 11mil to provide a total thickness of about 14.35mil.

FIG. 2 is a cross-sectional illustration of an embodiment of a one-piece ostomy pouch 110. The ostomy pouch 110 is similarly configured to the ostomy pouch 10 of FIG. 1, and generally includes a pouch 112 and a skin barrier 114. The pouch 112 includes first and second opposing walls 116, 118, which are sealed around peripheral edges 120 thereof by heat sealing or by any other suitable means to define a cavity 122 therebetween for collecting body waste.

Each of the first and second walls 116, 118 is formed of a multilayer composite film 124. The composite film 124 is designed to replace the film/nonwoven construction or the film/adhesive/nonwoven construction of prior art pouches. The composite film 124 includes at least one odor barrier film layer and at least one foam layer, which are coextruded. Thus, manufacturing processes of the pouch can be simplified by reducing number of suppliers required for film, nonwoven and adhesive, and eliminating steps for laminating or heat sealing the layers, which in turn provides cost savings. The foam layer of the composite film is configured to have softness sufficient for skin contact to replace the nonwoven layer of prior art pouches. The foam layer can be configured to have a skin contact quality soft feel by using rubbery resins and fine foam cells. Preferably, the foam layer also provides sound absorbing characteristics.

Preferably, the composite film 124 is configured to have a thickness similar to the total thickness of the film/nonwoven construction or the film/adhesive/nonwoven construction of prior art ostomy pouches. For example, the composite film 124 has an overall thickness of about 10 mil to about 16 mil. The composite film 125 can also be configured to have thinner thicknesses, for example, about 7 mil, to provide a lower cost composite film which still has similar softness and film characteristics as the thicker composite films. In some embodiments, the first wall 116 and the second wall 118 can be formed of different composite films, or only one of the first and second walls 116, 118 can be formed of a composite film.

FIG. 3 is a cross-sectional illustration of an embodiment of the composite film 124. The composite film 124 has a six-layer construction including a seal layer 126, tie layers 128, 132, a barrier layer 130, and foam layers 134, 136. In this embodiment, the composite film 124 has the structure ABCBDE, where A represents the seal layer, B represents the tie layers, C represents the barrier layer, D represents an inner foam layer, and E represents an outer foam layer.

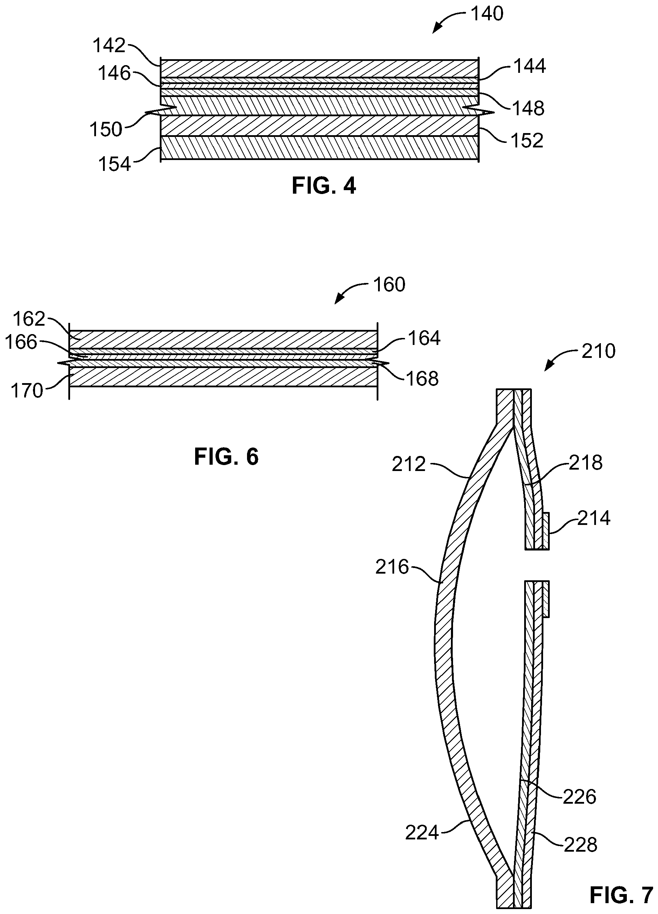

In other embodiments, the composite film can include more than six layers or less than six layers. For example, a composite film can have a five-layer construction including a barrier layer, two tie layers, a seal layer, and one foam layer (i.e. ABCBE). FIG. 6 is a cross-sectional illustration of a five-layer composite film embodiment including a seal layer 162, tie layers 164, 168, a barrier layer 166, and a foam layer 170. The composite film 160 has a seal/tie/barrier/tie/foam construction. Alternatively, a composite film can have a seven-layer construction including a barrier layer, two tie layers, a seal layer, and three foam layer (e.g. ABCBDDE).

The seal layer 126 is formed of a material having suitable heat sealability, such that the seal layers of the first and second walls 116, 118 can be heat sealed along their perimeter to form the pouch 112. Suitable materials for the seal layer 126 include ethylene based polymers, such as copolymers of ethylene with vinyl esters, e.g. EVA and EMA, ethylene alpha olefin copolymers (ethylene based plastomers), ethylene based elastomers (olefin block copolymers, OBC), and ethylene-propylene (EP) copolymers (PP-elastomer) and the blends thereof. Copolymers of ethylene with vinyl esters, such as ethylene vinyl acetate copolymer (EVA) and copolymers of ethylene methyl acrylate (EMA). Suitable EVA copolymers can contain about 5 wt.% to 35 wt.% vinyl acetate and more preferably, about 18 wt.% vinyl acetate, by weight of the copolymer. One such material is available from ExxonMobil as product Escorene® Ultra FL00218. Such a material has a melting point temperature of 86°C and a Shore A hardness of about 91. EVA is known to exhibit the necessary characteristics for joining to another EVA member, as by heat sealing, to provide an air-tight, liquid-tight seal at the joint or seal. EVA materials can be blended to facilitate formation and film extrusion. For example, an EVA blend can have about 98 percent by weight (wt.%) EVA with about 2 wt.% anti-block and slip additives, in an EVA carrier. One suitable additive is available from A. Schulman Inc., as Polybatch® SAB-1982VA.

Suitable EMA copolymers can include about 5 wt.% to about 35 wt.% of the methyl acrylate and preferably about 15 wt.% to about 30 wt.% methyl acrylate. One such EMA copolymer is Lotryl®18AM02 supplied by Arkema Inc. This copolymer has a melting point of 83°C and specific gravity of 0.841. The EMA resins can also be blended with anti-block and slip additives in an EVA carrier. One suitable material for blending is the aforementioned Polybatch® SAB-1982VA. Such a blend can have, for example EMA at about 98 wt.%, with about 2 wt.% Polybatch® SAB-1982VA anti-block and slip additive.

Another suitable material is an ethylene alpha olefin copolymers (ethylene based plastomers). One such a material is Exact® 0203 resin, supplied by ExxonMobil Corporation, which has a specific gravity of about 0.88, a Shore A hardness of about 95, a melting point temperature of about 95°C, and specific gravity of about 0.902. Another suitable resin is ethylene based elastomers (olefin block copolymers, OBC). One such material is Infuse® 9107 supplied by Dow. This material has a specific gravity of about 0.866, a Shore A hardness of about 60 and a melting point of about 121°C. Still another suitable resin is an ethylene-propylene copolymer (PP-elastomer) resin. It has excellent compatibility with polypropylene (PP) and polyethylene (PE). One such material is available from Dow Chemical as Versify®2200. This resin has melting point of about 82°C, a Shore A hardness of 94 and a Shore D hardness of 42. It has a specific gravity of 0.878. PP-elastomers such as Vistamaxx® from Exxon, and Notio® from Mitsui are also suitable.

For example, a blend for seal layer 126 can have about 49 wt. % EVA copolymer (Escorene® Ultra FL00218), about 49% ethylene alpha olefin copolymer (Exact® 0203), and about 2 wt.% Polybatch® SAB-1982VA anti-block and slip additive. Another example for a blend for seal layer 126 can have about 49 wt. % EMA copolymer (Lotryl®18AM02), about 49% OBC (Infuse® 9107), and about 2 wt.% Polybatch® SAB-1982VA anti-block and slip additive. Yet, another example for the seal layer 126 can have about 49 wt. % EMA copolymer (Lotryl®18AM02), about 49% ethylene-propylene copolymer (Versify®2200), and about 2 wt.% Polybatch® SAB-1982VA anti-block and slip additive.

In addition to heat sealability, the seal layer 126 can also provide sound absorbing properties. In such an embodiment, the seal layer 126 can comprise a vinyl-bond rich triblock copolymer, such as Hybrar®, to enhance sound absorbing properties and mechanical properties of the composite film. For example, the seal layer 126 can be formed from a blend of a vinyl-bond rich SIS triblock copolymer (Hybrar® 5127), a PP-elastomer (Vistamaxx®), and an EMA (Lotryl® 20MA08).

On either side of the barrier layer 130 are the tie layers 128, 132. The tie layers facilitate adhesion of the barrier layer 130 to the remainder of the composite film structure. The seal layer 126 and the inner foam layer 134 are adjacent to the tie layers 128, 132, respectively. The tie layers 128, 132 can be formed of the same material or different materials. Suitable materials for the ties layers 128, 132 include maleated polyolefins, such as a maleated ethylene methyl acrylate copolymers having maleic anhydride present at about 0.3 wt.% and methyl acrylate present at about 20 wt.% of the resin. One such material is available from Arkema, Inc. as Lotader®4503.

In addition to the adhesion function, the tie layers 128, 132 can also provide sound absorbing properties. In such an embodiment, the tie layers 128, 132 can comprise a vinyl-bond rich triblock copolymer, such as Hybrar®, to enhance sound absorbing properties and mechanical properties of the composite film. For example, the tie layers 128, 132 can be formed from a blend of a vinyl-bond rich SIS block copolymer (Hybrar® 5127), a maleated LLDPE (Bynel® CXA41E710 supplied by DuPont), and an antioxidant, or can be formed from a blend of a vinyl-bond rich SEPS block copolymer (Hybrar® 7125) and a maleated LLDPE (Bynel® CXA41E710).

The barrier layer 130 can be formed from various materials having gas barrier properties, such as, but not limited to, polyvinylidene chloride, vinylidene copolymer, polyamide, and ethylene-vinyl alcohol copolymer. Preferably, the barrier layer 130 is formed from a non-chlorine containing polymer that is substantially impermeable to malodor causing compounds typically encountered in ostomy pouches. Such malodor causing compounds can include sulfur containing compounds and indoles. Suitable barrier layer materials include resins such as amorphous polyamide (nylon) resin, which can be modified by an anhydride-modified olefinic polymer or copolymer, or an epoxy modified olefin polymer or copolymer to decrease the rigidity of the barrier layer. For example, the barrier layer 130 can be formed from a blend of an amorphous polyamide, such as Selar® PA3426R, by DuPont Company, and a functionalized rubber blend or compound, such as Lotader® 4720.

The inner foam layer 134 and the outer foam layer 136 can be formulated from the same material or different materials. For example, the inner foam layer 134 can be formed from a polyolefin with a blowing agent and a color additive, and the outer foam layer 136 can be formed from the same polyolefin with a blowing agent, slip and antiblock agents, and a color additive. Ethylene based polymers, such as copolymers of ethylene with vinyl esters, e.g. EVA and EMA, ethylene alpha olefin copolymers (ethylene based plastomers), ethylene based elastomers (olefin block copolymers, OBC), and ethylene-propylene (EP) copolymers (PP-elastomer) and the blends thereof are suitable for the foam layers. One suitable material is an ethylene vinyl acetate (EVA) copolymer having a vinyl acetate content of about 5 wt.% to 35 wt.%, and preferably about 10 wt.% to about 30 wt.%. One such material is Escorene®FL00218, supplied by ExxonMobil Corporation. The material contains 18 wt.% vinyl acetate and has a melting point temperature of about 86°C and a Shore A hardness of about 91. Suitable EMA copolymers can include about 5 wt.% to about 35 wt.% methyl acrylate and preferably about 10 wt.% to about 30 wt.% methyl acrylate. One such EMA copolymer is Lotryl®18AM02 supplied by Arkema Inc. This copolymer has a melting point of 83°C and specific gravity of 0.841.

Another suitable material is ethylene alpha olefin copolymers (ethylene based plastomers). One such material is Exact® 0203 resin, supplied by ExxonMobil Corporation, which has a specific gravity of about 0.88, a Shore A hardness of about 95, a melting point temperature of about 95°C, and specific gravity of about 0.902. Another suitable resin is ethylene based elastomers (olefin block copolymers, OBC). One such material is Infuse® 9107 supplied by Dow. This material has a specific gravity of about 0.866, a Shore A hardness of about 60 and a melting point of about 121°C. Still another suitable resin is an ethylene-propylene copolymer (PP-elastomer) resin. It has excellent compatibility with polypropylene (PP) and polyethylene (PE). One such material is available from Dow Chemical as Versify®2200. This resin has melting point of about 82°C, a Shore A hardness of 94, a Shore D hardness of 42, and a specific gravity of 0.878.

Preferably, the foam layers 134, 136 also provide at least some sound absorbing properties. In such an embodiment, each of the foam layers 134, 136 comprises a vinyl-bond rich triblock copolymer, such as Hybrar® from Kuraray Co. Ltd., to enhance mechanical properties and sound absorbing properties of the composite film. For example, each of the foam layers can be formed from a blend comprising a vinyl-bond rich SIS block copolymer, e.g. Hybrar® 5125 and 5127, or a vinyl-bond rich SEPS block copolymer, e.g. Hybrar® 7125, or a vinyl-bond rich SEEPS block copolymer, e.g. Hybrar® 7311. The vinyl-bond rich triblock copolymers can be used alone with foaming agent or blended with other polyolefins, such as EMA (e.g. Lotryl® 20MA08), to form the foam layers 134, 136. The foam layers may also include other additive ingredients, such as a processing aid (e.g. Polyone® FDM 55802 from PolyOne).

In one embodiment, the six-layer composite film 124 has a total thickness of about 280µm (11mil), in which the seal layer 126 has a thickness of about 64µm, each of the tie layers 128, 132 has a thickness of about 4µm, the barrier layer 130 has a thickness of about 4µm, the inner foam layer 134 has a thickness of about 140µm, and the outer foam layer 136 has a thickness of about 64µm.

In this embodiment, the seal layer 126 is formed a blend comprising about 49 wt.% of EVA copolymer (Escorene® FL00218), about 49 wt.% of PP-elastomers (Vistamaxx® 3980FL), and about 2 wt.% of a slip and antiblock agent (Polybatch® SAB-1982VA). Each of the tie layers 128, 132 is formed from a blend comprising about 80 wt.% EMA (Lotryl® 18MA02) and about 20 wt.% MAH grafted LLDPE (Bynel® CXA41E710). The barrier layer is formed from a blend comprising about 85 wt.% amorphous polyamide (Selar® PA3426R) and 15 wt.% functionalized rubber blend (Lotader® 4720). The inner foam layer 134 is formed from a blend comprising about 45 wt.% of EVA copolymer (Escorene® FL00218), about 45 wt.% of PP-elastomers (Vistamaxx® 3980FL), about 8 wt.% of color masterbatch, and about 2 wt.% of blowing agent (Safoam® FP-40 from Reedy International). The outer foam layer 136 is formed from a blend comprising about 48 wt.% of EVA copolymer (Escorene® FL00218), about 48 wt.% of PP-elastomers (Vistamaxx® 3980FL), about 2 wt.% of blowing agent (Safoam® FP-40), and about 2 wt.% of slip and antiblock agent (Polybatch® SAB-1982VA). The foam layers 134, 136, particularly the outer foam layer 136, include fine foam cells for soft skin touch feel. Further, the slip agent is added to the blend for the outer foam layer 136 to improve the smooth sleek feel of the foam.

Preferably, the foam layers provide sound absorbing properties in addition to a smooth soft feel for improved comfort for wearers. Thus, at least one foam layer comprises a vinyl-bond rich triblock copolymer such as a vinyl-bond rich SIS block copolymer, e.g. Hybrar® 5125 and 5127, or a vinyl-bond rich SEPS block copolymer, e.g. Hybrar® 7125, or a vinyl-bond rich SEEPS block copolymer, e.g. Hybrar® 7311.

In one embodiment, the six-layer composite film 124 has a total thickness of about 288µm (11.3mil), in which the seal layer 126 has a thickness of about 20µm, each of the tie layers 128, 132 has a thickness of about 3µm, the barrier layer 130 has a thickness of about 4µm, the inner foam layer 134 has a thickness of about 238µm, and the outer foam layer 136 has a thickness of about 20µm.

In this embodiment, the seal layer 126 is formed from a blend comprising about 49 wt.% of EVA copolymer (Escorene® FL00218), about 49 wt.% of PP-elastomers (Vistamaxx® 3980FL), and about 2 wt.% of a slip and antiblock agent (Polybatch® SAB-1982VA). Each of the tie layers 128, 132 is formed from a blend comprising about 80 wt.% EMA (Lotryl® 18MA02) and about 20 wt.% MAH grafted LLDPE (Bynel® CXA41E710). The barrier layer 130 is formed from a blend comprising about 85 wt.% amorphous polyamide (Selar® PA3426R) and 15 wt.% functionalized rubber blend (Lotader® 4720). The inner foam layer 134 is formed from a blend comprising about 47 wt.% of vinyl-bond rich SEPS block copolymer (Hybrar® 7125), about 47 wt.% of EMA (Lotryl® 20MA08), about 4 wt.% of color masterbatch, and about 2 wt.% of blowing agent (Safoam® FP-20). The outer foam layer 136 is formed from a blend comprising about 48 wt.% of vinyl-bond rich SEPS block copolymer (Hybrar® 7125), about 48 wt.% of EMA (Lotryl® 20MA08), about 2 wt.% of blowing agent (Safoam® FP-20), and about 2 wt.% of slip and antiblock agent (Polybatch® SAB-1982VA). Preferably, the foam layers 134, 136 include fine foam cells for soft smooth feel, and open cell structure to maximize sound absorbing properties of the foam layers. Further, the slip agent is added to the blend for the outer foam layer 136 for improved smooth sleek feel of the foam.

In another embodiment, the six-layer composite film 124 has a total thickness of about 288µm (11.3mil), in which the seal layer 126 has a thickness of about 20µm, each of the tie layers 128, 132 has a thickness of about 3µm, the barrier layer 130 has a thickness of about 40µm, the inner foam layer 134 has a thickness of about 202µm, and the outer foam layer 136 has a thickness of about 20µm. In this embodiment, the barrier layer 130 is formed from a low melting point nylon, and thus, a vinyl-bond rich SIS block copolymer (Hybrar® 5125 or 5127), which is thermally not as stable as has a lower melting point than the vinyl-bond rich SEPS block copolymer (Hybrar® 7125) or SEEPS block copolymer (Hybrar® 7311), can be used for the foam layers 134, 136. In the previously described embodiment, the amorphous polyamide (Selar® PA3426R) used for the barrier layer has a relatively high melt flow temperature, thus requires a relatively high processing temperature. Therefore, the vinyl-bond rich SEPS or SEEPS block copolymer, which is more heat stable than the vinyl-bond rich SIS block copolymer, was selected for the foam layers. The vinyl-bond rich SIS block copolymers can provide additional cost benefits and improved sound absorbing properties in some embodiments.

In this embodiment, the seal layer 126 is formed from a blend comprising about 59 wt.% of EMA (Lotryl® 20MA08), about 39 wt.% of PP-elastomers (Vistamaxx® 3980FL), and about 2 wt.% of a slip and antiblock agent (Polybatch® SAB-1982VA). Each of the tie layers 128, 132 is formed from a blend comprising about 80 wt.% EMA (Lotryl® 20MA08) and about 20 wt.% MAH grafted LLDPE (Bynel® CXA41E710). The barrier layer 130 is formed from a blend comprising about 85 wt.% low melting point nylon (Grilon® BM13 from EMS-Grivory) and 15 wt.% functionalized rubber blend (Lotader® 4720). The inner foam layer 134 is formed from a blend comprising about 46.5 wt.% of vinyl-bond rich SIS block copolymer (Hybrar® 5127), about 46.5 wt.% of EMA (Lotryl® 20MA08), about 5 wt.% of color masterbatch, and about 2 wt.% of blowing agent (Safoam® FP-20). The outer foam layer 136 is formed from a blend comprising about 48 wt.% of vinyl-bond rich SIS block copolymer (Hybrar® 5127), about 48 wt.% of EMA (Lotryl® 20MA08), about 2 wt.% of blowing agent (Safoam® FP-20), and about 2 wt.% of slip and antiblock agent (Polybatch® SAB-1982VA). Preferably, the foam layers 134, 136 include fine foam cells for soft smooth feel, and open cell structure to maximize sound absorbing properties of the foam layers. Further, the slip agent is added to the blend for the outer foam layer 136 for an improved smooth sleek feel of the foam.

In some embodiments, a composite film includes at least one layer comprising a filler to provide improved sound absorbing or sound deadening properties. Fillers having a platelet shape, such as mica and talc, are preferred. For example, a composite film having improved sound absorbing properties can include at least one sound absorbing foam layer comprising a vinyl-bond rich triblock copolymer and at least one other layer comprising a filler, such as mica, barium sulfate, and/or talc.

In one embodiment, a six-layer composite film 124 (FIG. 3) includes a seal layer comprising a filler. The composite film has a total thickness of about 288µm (11.3mil) including a seal layer 126 having a thickness of about 25µm, two tie layers 128, 132, each of which having a thickness of about 4µm, a barrier layer 130 having a thickness of about 4µm, an inner foam layer 134 having a thickness of about 166µm, and an outer foam layer 136 having a thickness of about 85µm. The seal layer 126 is formed from a polymer blend comprising about 33.3 wt.% of a EMA/mica blend (the EMA/mica blend includes about 50 wt.% mica (Suzorite® 60S from Imerys Pigments) and about 50 wt.% EMA (Lotryl® 20MA08)), about 25 wt.% of EMA (Lotryl® 20MA08), about 40 wt.% of PP-elastomers (Vistamaxx® 3980FL), and about 1.7 wt.% of a slip and antiblock agent (Polybatch® SAB-1982VA). Each of the tie layers 128, 132 is formed from a blend comprising about 80 wt.% EMA (Lotryl® 18MA02) and about 20 wt.% MAH grafted LLDPE (Bynel® CXA41E710). The barrier layer 130 is formed from a blend comprising about 85 wt.% amorphous polyamide (Selar® PA3426R) and about 15 wt.% functionalized rubber blend (Lotader® 4720). The inner foam layer 134 is formed from a blend comprising about 55 wt.% of vinyl-bond rich SEPS block copolymer (Hybrar® 7125), about 31 wt.% of EMA (EMAC® 2207 from West Lake), about 11 wt.% of color masterbatch, and about 3 wt.% of blowing agent (Expancel® 950MB80 from Akzo). The outer foam layer 136 is formed from a blend comprising about 52 wt.% of vinyl-bond rich SEPS block copolymer (Hybrar® 7125), about 43 wt.% of EMA (Lotryl® 20MA08), about 3 wt.% of blowing agent (Expancel® 950MB80), and about 2 wt.% of slip and antiblock agent (Polybatch® SAB-1982VA).

FIG. 7 is a cross-sectional illustration of a one-piece ostomy pouch 210 according to anther embodiment. The ostomy pouch 210 is similarly configured as the ostomy pouch 110 of FIG. 2, and generally includes a pouch 212 and a skin barrier 214. In this embodiment, a first wall 216 is formed of a composite film 224, and a second wall 218 is formed of a film 226. Further, the ostomy pouch 210 includes a nonwoven layer 228 attached to the second wall 218 to accommodate users who desire characteristics of a nonwoven comfort panel, for example, breathability.

The composite film 224 includes at least one sound absorbing foam layer comprising a vinyl-bond rich triblock copolymer such as a vinyl-bond rich SIS block copolymer, e.g. Hybrar® 5125 and 5127, or a vinyl-bond rich SEPS block copolymer, e.g. Hybrar® 7125, or a vinyl-bond rich SEEPS block copolymer, e.g. Hybrar® 7311. The composite film 224 can have any of the multilayer composite constructions discussed in this disclosure. For example, the composite film 224 can have a six-layer construction including a seal layer, two tie layers, a barrier layer, and two foam layers, as shown in FIG. 3. Alternatively, the composite film 224 can have a five-layer construction as shown in FIG. 6 or a seven-layer construction as shown in FIG. 4.

The second wall 218 can be formed of a suitable monolayer or multilayer film, such as a composite film including at least one sound absorbing foam layer comprising a vinyl-bond rich triblock copolymer. For example, the film 226 can be the same composite film as the composite film 224 or a different composite film. In one embodiment, the composite film 224 and the film 226 are the same composite film having a six-layer construction of FIG. 3, which includes two foam layers 134, 136 comprising a vinyl-bond rich triblock copolymer. In another embodiment, the film 226 is a different composite film than the composite film 224. For example, the film 226 can be a thinner composite film than the composite film 224. For example, the composite film 224 can have a thickness of about 11 mil, while the film 226 is a composite film having a thickness of about 7 mil.

Alternatively, the film 226 can be a suitable polymeric film, which does not include a foam layer. The film 226 can be a single layer film or a multilayer film. Preferably, the multilayer film includes at least one odor barrier layer. For example, the film 226 can be a six-layer film having a thickness of about 2.24 mil (57µm) and a seal layer/tie layer/barrier layer/tie layer/inner layer/seal layer construction. In another example, the film 226 can be a seven-layer film having a seal layer/inner layer/tie layer/barrier layer/tie layer/inner layer/seal layer construction. In some embodiments, the multilayer film for the second wall 218 includes at least one layer comprising a vinyl-bond rich triblock copolymer.

Although the embodiments of FIGS. 2 and 7 are a one-piece ostomy appliance with a closed-end pouch, the above discussed multilayer composite films can be used to make other types of ostomy appliances, such as two-piece ostomy appliances and drainable ostomy pouches.

### Examples and Test Results

Three composite film samples and a control laminate were prepared and tested for their mechanical and sound absorbing properties. Each of the composite film samples had a total thickness of about 288µm (11.3mil) and a seven-layer construction (seal layer/tie layer/barrier layer/tie layer/foam layer/foam layer/foam layer). Each of the foam layers included vinyl-bond rich SEPS block copolymer (Hybrar® 7125) for sound absorbing properties. The control laminate, which is currently used in some known ostomy pouches, had a total thickness of about 11.3mil including a PE nonwoven layer, an adhesive layer, and a multilayer barrier film.

**TABLE 1 - Composite Film Samples and Control Laminate**

| **Sample Code** | **Foam 1** | | **Foam 2** | | **Foam 3** | | **Tie 1** | | **Barrier** | | **Tie 2** | | **Seal** | |
|---|---|---|---|---|---|---|---|---|---|---|---|---|---|---|
| **X3299** | **85µm** 50% Hybrar® 7125 + 46% Lotryl® 20MA08 + 2% Safoam® FP-20 + 2% Polybatch® SAB-1982VA | | **83µm** 65% Hybrar® 7125 + 34% EMAC® 2207 + 1% Safoam® FP-20 | | **83µm** 65% Hybrar® 7125 + 34% EMAC® 2207 + 1% Safoam® FP-20 | | **4µm** 80% Lotryl® 18MA02 + 20% Bynel® CXA41E710 | | **4µm** 85% Selar® +15% Lotader® 4720 | | **4µm** same as Tie 1 | | **25µm** 50% Lotryl® 20MA08 + 48% Vistamaxx® 3980FL + 2% Polybatch® SAB-1982VA | |
| **X3300** | **85µm** 50% Hybrar®, 7125 + 46% Lotryl® 20MA08 + 2% Safoam® FPE-20 + 2% Polybatch® SAB-1982VA | | **83µm** 65% Hybrar®, 7125 + 34% EMAC® 2207 + 1% Safoam® FPE-20 | | **83µm** 65% Hybrar®, 7125 + 34% EMAC® 2207 + 1% Safoam® FPE-20 | | **4µm** 80% Lotryl® 18MA02 + 20% Bynel® CXA41E710 | | **4µm** 85% Selar® PA3426R +15% Lotader® 4720 | | **4µm** same as Tie 1 | | **25µm** 50% Lotryl® 20MA08 + 48% Vistamaxx® 3980FL + 2% Polybatch® SAB-1982VA | |
| **X3301** | **85µm** 50% Hybrar® 7125 + 46% Lotryl® 20MA08 + 2% Expancel® 950MB80 + 2% Polybatch® SAB-1982VA | | **83µm** 65% Hybrar® 7125 + 34% EMAC® 2207 + 1% Expancel® 950MB80 | | **83µm** 65% Hybrar® 7125 + 34% EMAC® 2207 + 1% Expancel® 950MB80 | | **4µm** 80% Lotryl® 18MA02 + 20% Bynel® CXA41E710 | | **4µm** 85% Selar® PA3426R +15% Lotader® 4720 | | **4µm** same as Tie 1 | | **25µm** 50% Lotryl® 20MA08 + 48% Vistamaxx® 3980FL + 2% Polybatch® SAB-1982VA | |
| | | | | | | | | | | | | | | |

| | **Nonwoven** | **Adhesive** | | **57µm (2.24mil) 6-layer film** | | | | | | | | | | |
|---|---|---|---|---|---|---|---|---|---|---|---|---|---|---|
| **Control** | **203.2µm (8mil)** PE nonwoven | **28µm (1.1mil)** adhesive | | **Seal** 97.5% Escorene® FL00218 + 2.5% Polybatch® SAB-1982VA | | **Inner** 87%-89.5% Escorene® FL00218 + 10.5%-13% Schulman® T92030 Beige | | **Tie 1** 80% Lotryl® 18MA0 2 + 20% Bynel® CXA-41E710 | | **Barrier** 85% Selar® PA3426 R+15% Lotader® 4720 | | **Tie 2** same as Tie 1 | | **Seal** 97.5% Escorene® FL00218 + 2.5% Polybatch® SAB-1982VA |

As summarized in Table 1, Sample X3299 is a seven-layer composite film 140 (FIG. 4) having a foam layer 1/foam layer 2/foam layer 3/tie layer 1/barrier layer/tie layer 2/seal layer construction. The seal layer 142 has a thickness of about 25µm, and is formed of a blend comprising about 50 wt.% of EMA (Lotryl® 20MA08), about 48 wt.% of PP-elastomers (Vistamaxx® 3980FL), and about 2 wt.% of a slip and antiblock agent (Polybatch® SAB-1982VA). Each of the tie layer 1 (148) and tie layer 2 (144) has a thickness of about 4µm, and is formed from a blend comprising about 80 wt.% EMA (Lotryl® 18MA02) and about 20 wt.% MAH grafted LLDPE (Bynel® CXA41E710). The barrier layer 146 has a thickness of about 4µm, and is formed from a blend comprising about 85 wt.% amorphous polyamide (Selar® PA3426R) and about 15 wt.% functionalized rubber blend (Lotader® 4720). Each of the foam layer 2 (152) and the foam layer 3 (150) has a thickness of about 83µm, and is formed from a blend comprising about 65 wt.% of vinyl-bond rich SEPS block copolymer (Hybrar® 7125), about 34 wt.% of EMA (EMAC® 2207), and about 1 wt.% of blowing agent (Safoam® FP-20). The foam layer 1 (154) has a thickness of about 85µm, and is formed from a blend comprising about 50 wt.% of vinyl-bond rich SEPS block copolymer (Hybrar® 7125), about 46 wt.% of EMA (Lotryl® 20MA08), about 2 wt.% of blowing agent (Safoam® FP-20), and about 2 wt.% of slip and antiblock agent (Polybatch® SAB-1982VA). Thus, the composite film 140 of Sample X3299 has a total thickness of about 288µm (11.3mil).

Sample X3300 is also a seven-layer composite film 140 having the same layer construction as SampleX3299, which is illustrated in FIG. 4. The seal layer 142 has a thickness of about 25µm, and is formed from a blend comprising about 50 wt.% of EMA (Lotryl® 20MA08), about 48 wt.% of PP-elastomers (Vistamaxx® 3980FL), and about 2 wt.% of a slip and antiblock agent (Polybatch® SAB-1982VA). Each of the tie layer 1 (148) and tie layer 2 (144) has a thickness of about 4µm, and is formed from a blend comprising about 80 wt.% EMA (Lotryl® 18MA02) and about 20 wt.% MAH grafted LLDPE (Bynel® CXA41E710). The barrier layer 146 has a thickness of about 4µm, and is formed from a blend comprising about 85 wt.% amorphous polyamide (Selar® PA3426R) and about 15 wt.% functionalized rubber blend (Lotader® 4720). Each of the foam layer 2 (152) and the foam layer 3 (150) has a thickness of about 83µm, and is formed from a blend comprising about 65 wt.% of vinyl-bond rich SEPS block copolymer (Hybrar® 7125), about 34 wt.% of EMA (EMAC® 2207), and about 1 wt.% of blowing agent (Safoam® FPE-20). The foam layer 1 (154) has a thickness of about 85µm, and is formed from a blend comprising about 50 wt.% of vinyl-bond rich SEPS block copolymer (Hybrar® 7125), about 46 wt.% of EMA (Lotryl® 20MA08), about 2 wt.% of blowing agent (Safoam® FPE-20), and about 2 wt.% of slip and antiblock agent (Polybatch® SAB-1982VA). Thus, the composite film 140 of Sample X3300 has a total thickness of about 288µm (11.3mil).

Sample X3301 is also a seven-layer composite film 140 having the same layer construction as SampleX3299, which is illustrated in FIG. 4. The seal layer 142 has a thickness of about 25µm, and is formed from a blend comprising about 50 wt.% of EMA (Lotryl® 20MA08), about 48 wt.% of PP-elastomers (Vistamaxx® 3980FL), and about 2 wt.% of a slip and antiblock agent (Polybatch® SAB-1982VA). Each of the tie layer 1 (148) and tie layer 2 (144) has a thickness of about 4µm, and is formed from a blend comprising about 80 wt.% EMA (Lotryl® 18MA02) and about 20 wt.% MAH grafted LLDPE (Bynel® CXA41E710). The barrier layer 146 has a thickness of about 4µm, and is formed from a blend comprising about 85 wt.% amorphous polyamide (Selar® PA3426R) and about 15 wt.% functionalized rubber blend (Lotader® 4720). Each of the foam layer 2 (152) and the foam layer 3 (150) has a thickness of about 83µm, and is formed from a blend comprising about 65 wt.% of vinyl-bond rich SEPS block copolymer (Hybrar® 7125), about 34 wt.% of EMA (EMAC® 2207), and about 1 wt.% of blowing agent (Expancel® 950MB80 from Akzo). The foam layer 1 (154) has a thickness of about 85µm, and is formed from a blend comprising about 50 wt.% of vinyl-bond rich SEPS block copolymer (Hybrar® 7125), about 46 wt.% of EMA (Lotryl® 20MA08), about 2 wt.% of blowing agent (Expancel® 950MB80), and about 2 wt.% of slip and antiblock agent (Polybatch® SAB-1982VA). Thus, the composite film 140 of Sample X3301 has a total thickness of about 288µm (11.3mil).

The layers of Samples X3299, X3300, and X3301 were coextruded to form the composite film 140. Each layer was extruded using a separate extruder with appropriate settings for the particular polymer blend.

The control laminate had a thickness of about 11.3mil, and included a PE nonwoven laminated to a six-layer odor barrier film with an adhesive between them. The six-layer odor barrier film had a thickness of about 2.24mil (57µm), and a seal layer/tie layer/barrier layer/tie layer/inner layer/seal layer construction. Each of the seal layers was formed from a blend of about 97.5 % wt. EVA copolymer (Escorene® FL00218 available from ExxonMobil Corporation) and about 2.5 wt.% anti-block/slip additive (Polybatch® SAB1982VA available from Schulman Inc.) Each of the tie layers was formed from a blend of about 80 wt.% EMA (Lotryl® 18MA02) and about 20 wt.% MAH grafted LLDPE (Bynel® CXA41E710.) The barrier layer was formed from a blend of about 85 wt.% of an amorphous polyamide (Selar® PA3426R) and about 15 wt.% functionalized rubber blend (Lotader® 4720.) The inner layer was formed from a blend of about 87 wt.%-89.5 wt.% EVA copolymer (Escorene® FL00218) and about 10.5 wt.%-13 wt.% Schulman® T92030 Beige.

Mechanical properties of the sample composites and the control laminate were evaluated, and their data is summarized in Table 2.

**TABLE 2 - Mechanical Properties of Samples**

| | | **X3299** | **X3300** | **X3301** | **Control** |
|---|---|---|---|---|---|
| **Actual Total Thickness (µm)** | | 280 | 288 | 294 | 280 |
| **Elmendorf Tear at 800 mm (mN)** | **MD** | 23154 | 24036 | 14058 | - |
| | **CD** | 13327 | 15872 | 9847 | - |
| **Elmendorf Tear at 800 mm (mN/mil)** | **MD** | 2049 | 2127 | 1244 | - |
| | **CD** | 1179 | 1405 | 871 | - |
| **Elmendorf Tear at 800 mm (gf/mil)** | **MD** | 209 | 217 | 127 | - |
| | **CD** | 120 | 143 | 89 | - |
| **Tensile Strength (N/mm²)** | **MD** | 6.9 | 6.6 | 4.3 | 6.9 |
| | **CD** | 6.7 | 6.5 | 4.0 | 2.8 |
| **Tensile Strength (psi)** | **MD** | 1000 | 951 | 626 | 1001 |
| | **CD** | 965 | 937 | 586 | 405 |
| **Tensile Yield (N/mm²)** | **MD** | 2.8 | 2.1 | 2.3 | 3.6 |
| | **CD** | 2.3 | 2.2 | 1.7 | 2.5 |
| **Tensile Yield (psi)** | **MD** | 412 | 308 | 333 | 522 |
| | **CD** | 327 | 312 | 245 | 356 |
| **Elongation at Break (%)** | **MD** | 628 | 746 | 532 | 254 |
| | **CD** | 746 | 745 | 679 | 403 |
| **Elongation at Yield (%)** | **MD** | 42.9 | 37.9 | 32.4 | 137 |
| | **CD** | 33.4 | 35.1 | 37.3 | 86 |
| **Modulus (N/mm²)** | **MD** | 46.7 | 34.2 | 36.7 | 33.8 |
| | **CD** | 37.8 | 32.8 | 26.5 | 26.2 |
| **Modulus (ksi)** | **MD** | 6.8 | 5.0 | 5.3 | 4.9 |
| | **CD** | 5.5 | 4.8 | 3.8 | 3.8 |

The modulus data as shown in Table 2 indicate that Samples X3299, X3300, and X3301 have similar softness as the control laminate. The tensile strength data in machine direction (MD) and cross direction (CD) indicates that the control laminate has more anisotropicity. The elongation at break data indicates that Samples X3299, X3300, and X3301 are more ductile than the control laminate. Further, Samples X3299, X3300, and X3301 have good Elmendorf tear strength. Overall, the data indicates that Samples X3299, X3300, and X3301 have suitable mechanical properties for ostomy pouches.

Samples X3299, X3300, and X3301 and the control laminate were tested according to ASTM E2611-09 (Standard Test Method for Measurement of Normal Incidence Sound Transmission of Acoustical Materials Based on the Transfer Matrix Method) using Bruel & Kjaer Sound Impedance Tube Kit-Type 4206T. In this test, a sound source (e.g. loudspeaker) is mounted at one end of an impedance tube, and the sample is placed in a holder in the tube at a distance away from the sound source. The loudspeaker generates broadband, stationary random sound waves that propagate as plane waves. The plane waves hit the sample with part of the waves reflected back into the source tube, part absorbed by the laminate sample, and part passing through the sample to a receiving tube. By measuring the sound pressure at four fixed locations (two in the source tube and two in the receiving tube) and calculating the complex transfer function using a four-channel digital frequency analyzer, the transmission loss of the laminate sample is determined.

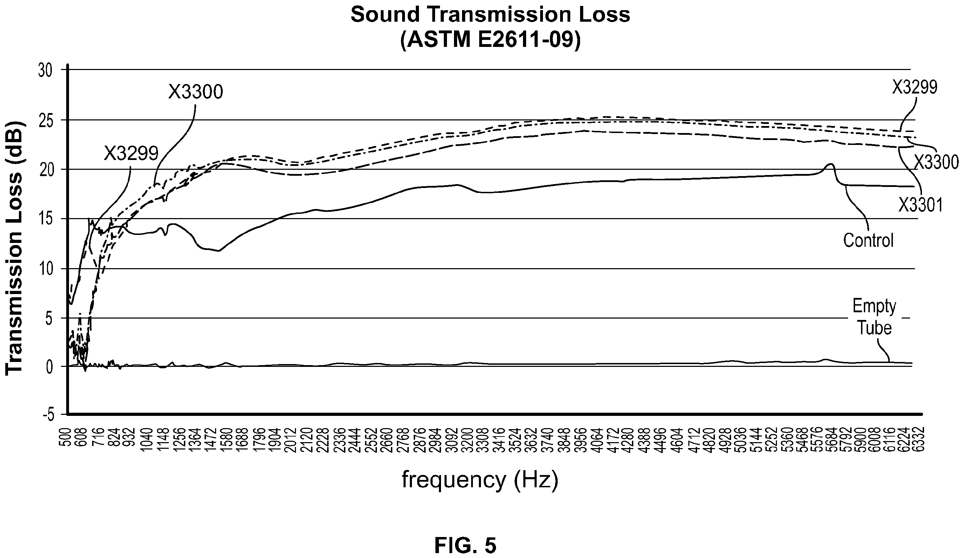

The sound tube transmission loss test data for laminate samples are plotted and shown in FIG. 5. Transmission loss expressed in decibel (dB) shows the degree of sound reduced or absorbed by the samples. The most audible range of human hearing is between about 1,000 Hz to 4,000 Hz. As shown in FIG. 5, Samples X3299, X3300, and X3301 have significantly better sound reduction/absorption properties than the control laminate. For example, Samples X3299 and X3300 provided more sound reduction than the control laminated by more than about 6dB at around 3,500-4,000 Hz frequencies. In ostomy applications, an improvement in the sound transmission loss of about 6dB represents a significant reduction of embarrassing flatus gas noise.

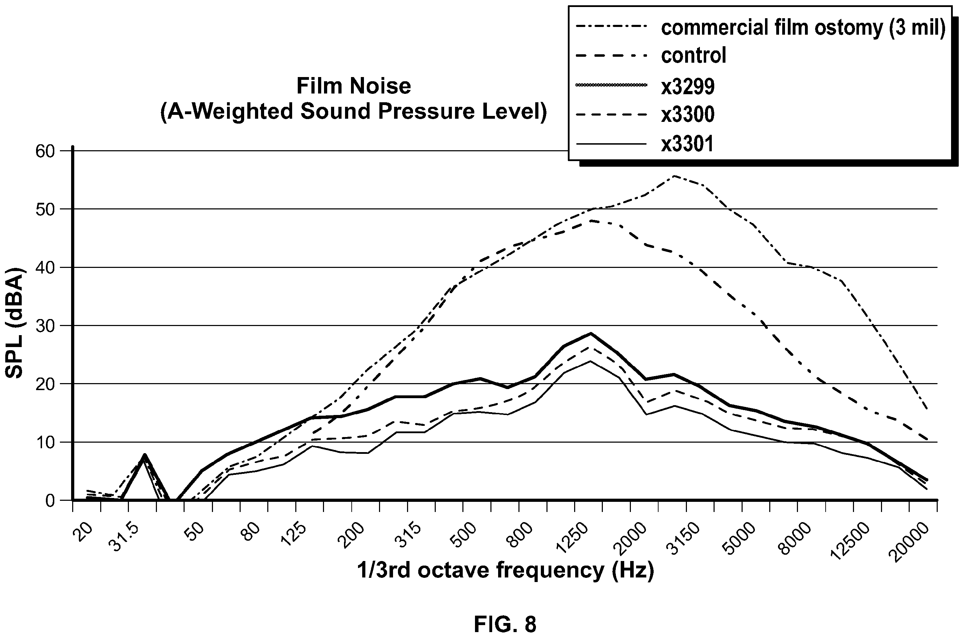

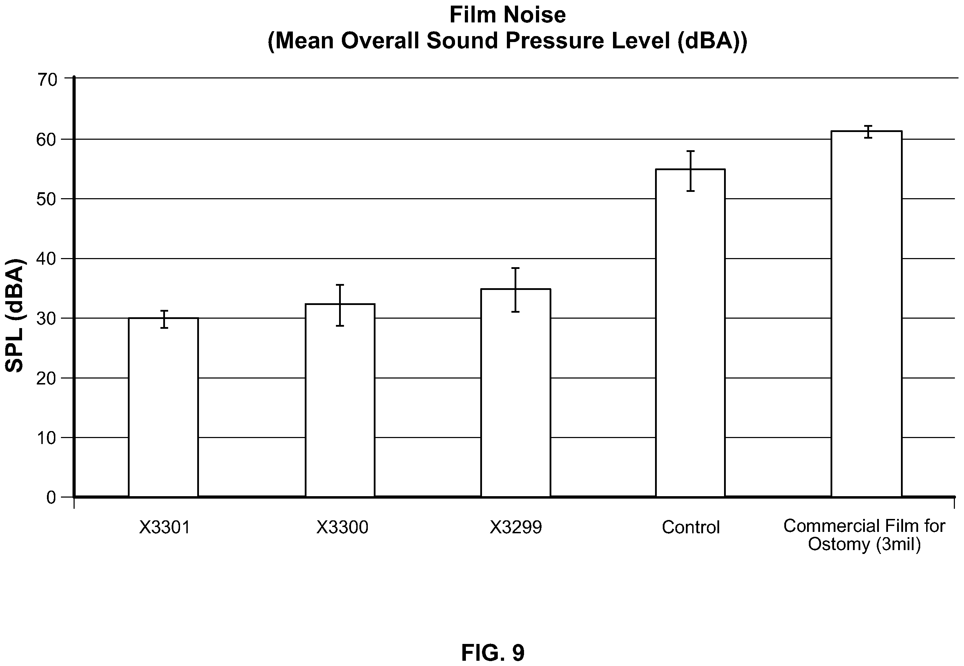

In addition to the sound absorbing properties, the laminate samples were also evaluated for film noise properties. The film noise properties are different than the sound absorbing properties in that the sound absorbing properties are indicative of sample's ability for reducing flatus noise, whereas the film noise properties are indicative of a level of noise produced by the sample itself, for example, crackling noise made by the sample. The film noise of the laminate samples were measured and plotted in FIGS. 8 and 9. FIG. 8 is a graph of a-weighted sound pressure level, and FIG. 9 is a graph of mean overall sound pressure level of the laminate samples, the control sample and a commercial film for ostomy pouch. The commercial film, which was a multilayer film including a barrier layer comprising vinylidene chloride-methyl acrylate copolymer, had a thickness of 3 mil. As can be seen in FIGS. 8 and 9, Samples X3299, X3300, and X3301 have significantly lower sound pressure levels than the control laminate and the commercial film. Thus, in addition to providing superior sound absorbing properties, the laminate samples also make less noise than the control laminate and the commercial film. That is, ostomy pouches made using the laminate samples can reduce flatus gas noise better, and are also quieter than those made using the control laminate or the commercial film.

Preferably, a composite film also includes at least one layer comprising a filler, such as talc, barium sulfate and/or mica, to further enhance sound absorbing properties. Two-layer laminate samples including a layer comprising barium sulfate or talc (Sample 302-2 and Sample 303-3) were prepared and evaluated for their sound absorbing properties. A two-layer control sample was also prepared. The compositions of the two-layer laminate samples and the control sample are summarized in Table 3.

**TABLE 3 - Laminate Samples and Control Sample**

| | **First Layer (1 mil)** | **Second Layer (2 mil)** |
|---|---|---|
| **Control** | 50.0wt.% of Lotryl® 20MA08 + 48.0wt.% Vistamaxx® 3980FL + 2.0wt.% Polybatch® SAB-1982VA | 60wt.% Hybrar® 5125 + 38wt.% Lotryl® 20MA08 + 2wt.% Polybatch® SAB-1982VA |
| **Sample 302-2** | 20.0wt.% of Lotryl® 20MA08 + 48.0wt.% Vistamaxx® 3980FL + 30.0wt.% Huberbrite® HB1 + 2.0wt.% Polybatch® SAB-1982VA | 60wt.% Hybrar® 5125 + 38wt.% Lotryl® 20MA08 + 2wt.% Polybatch® SAB-1982VA |
| **Sample 302-3** | 20.0wt.% of Lotryl® 20MA08 + 48.0wt.% Vistamaxx® 3980FL + 30.0wt.% Luzenac® HAR T-84 + 2.0wt.% Polybatch® SAB-1982VA | 60wt.% Hybrar® 5125 + 38wt.% Lotryl® 20MA08 + 2wt.% Polybatch® SAB-1982VA |

Each of the samples (Sample 302-2 and Sample 303-3) and the control sample had a total thickness of about 3 mil, and included a first layer having a thickness of about 1 mil and a second layer having a thickness of 2 mil. The second layer of Sample 302-2, Sample 303-3, and the control sample was formed of the same film comprising about 60 wt.% of a vinyl-bond rich SIS block copolymer (Hybrar® 5125), about 38 wt.% of EMA (Lotryl® 20MA08), and about 2 wt.% of slip and antiblock agent (Polybatch® SAB-1982VA). The first layer of Sample 302-2 comprised about 20.0 wt.% of EMA (Lotryl® 20MA08), about 48.0 wt.% of PP-elastomers (Vistamaxx® 3980FL), about 30.0 wt.% barium sulfate (Huberbrite® HB1 from Huber), and about 2.0 wt.% of slip and antiblock agent (Polybatch® SAB-1982VA). The first layer of Sample 302-3 comprised about 20.0 wt.% of EMA (Lotryl® 20MA08), about 48.0 wt.% of PP-elastomers (Vistamaxx® 3980FL), about 30.0 wt.% talc (Luzenac® HAR T-84 from Imerys), and about 2.0 wt.% of slip and antiblock agent (Polybatch® SAB-1982VA). The first layer of the control sample comprised about 50.0 wt.% of EMA (Lotryl® 20MA08), about 48.0 wt.% of PP-elastomers (Vistamaxx® 3980FL), and about 2.0 wt.% of slip and antiblock agent (Polybatch® SAB-1982VA).

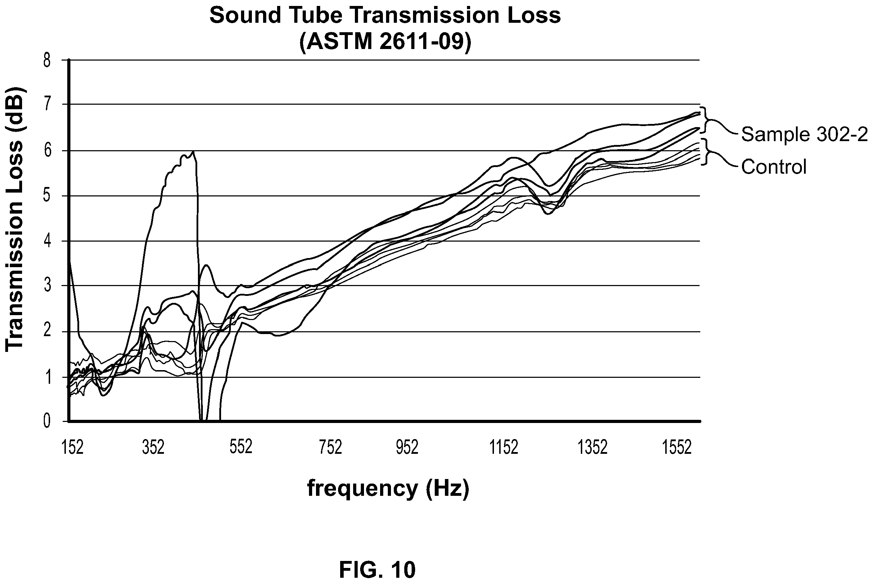

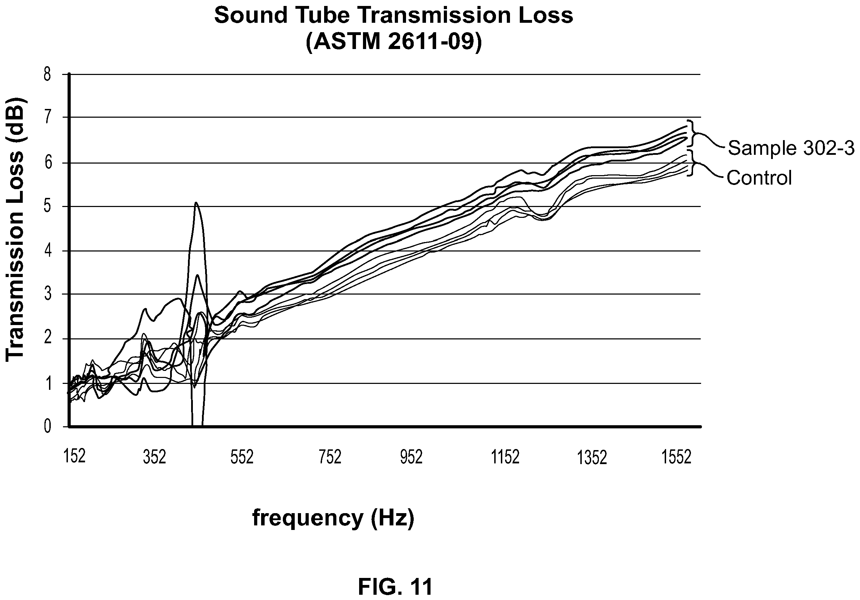

Multiple samples of Sample 302-2, Sample 303-3, and Control were tested according to ASTM E2611-09. The sound tube transmission loss test data for these samples are plotted and shown in FIGS. 10 and 11. The sound transmission loss expressed in decibel (dB) shows the degree of sound reduced or absorbed by the samples. FIG. 10 shows the sound transmission loss data of Sample 302-2 samples and the control samples. FIG. 11 shows the sound transmission loss data of Sample 302-3 samples and the control samples. As shown in FIGS. 10 and 11, Sample 302-2 including a second layer comprising about 30 wt.% barium sulfate and Sample 302-3 including a second layer comprising about 30 wt.% talc have higher sound transmission loss data than the control samples, which did not include any filler. Thus, a composite film including at least one layer comprising a filler, such as barium sulfate or talc, can provide better sound absorbing properties than those that do not include a filler.

Additional multilayer film samples including an outer foam layer and a gas barrier layer were prepared and tested for their mechanical and sound absorbing properties.

**TABLE 4 - Multilayer Film Samples**

| **Sample** | **Skin (Foam)** | **Inner-2 (Foam)** | **Inner-1 (Foam)** | **Tie 1** | **Barrier** | **Tie 2** | **Seal** |
|---|---|---|---|---|---|---|---|
| **X3299-1 (280µm)** | 232µm | | | (a*) 80% Lotryl® 18MA02 + 20% Bynel® CXA41E710 | (b*) 85% Selar® PA3426R +15% Lotader® 4720 | (a*) same as Tie 1 | 25µm 50% Lotryl® 20MA08 + 48% Vistamaxx® 3980FL + 2% Polybatch® SAB-1982VA |
| | 50% Hybrar® 7125 + 46% Lotryl® 20MA08 + 2% Safoam® FP-20 + 2% Polybatch® SAB-1982VA | 65% Hybrar®, 7125 + 34% EMAC® 2207 + 1% Safoam® FP-20 | 65% Hybrar®, 7125 + 34% EMAC® 2207 + 1% Safoam® FP-20 | | | | |
| **X3300-1 (288µm)** | 232µm | | | (a*) 80% Lotryl® 18MA02 + 20% Bynel® CXA41E710 | (b*) 85% Selar® PA3426R +15% | (a*) same as Tie 1 | 25µm 50% Lotryl® 20MA08 + 48% Vistamaxx® |
| | 50% Hybrar® 7125 + 46% Lotryl® 20MA08 + 2% Safoam® | 65% Hybrar® 7125 + 34% EMAC® | 65% Hybrar® 7125 + 34% EMAC® | | | | |
| | FPE-20 + 2% Polybatch® SAB-1982VA | 2207 + 1% Safoam® FPE-20 | 2207 + 1% Safoam® FPE-20 | | Lotader® 4720 | | 3980FL + 2% Polybatch® SAB-1982VA |
| **X3301-1 (294µm)** | 261µm | | | (a*) 80% Lotryl® 18MA02 + 20% Bynel® CXA41E710 | (b*) 85% Selar® PA3426R +15% Lotader® 4720 | (a*) same as Tie 1 | 17µm 50% Lotryl® 20MA08 + 48% Vistamaxx® 3980FL + 2% Polybatch® SAB-1982VA |
| | 50% Hybrar® 7125 + 46% Lotryl® 20MA08 + 2% Expancel® 950MB80 + 2% Polybatch® SAB-1982VA | 65% Hybrar® 7125 + 34% EMAC® 2207 + 1% Expancel® 950MB80 | 65% Hybrar® 7125 + 34% EMAC® 2207 + 1% Expancel® 950MB80 | | | | |
| **X3356-1 (249µm)** | 209µm | | | (a*) 80% Lotryl® 18MA02 + 20% Bynel® CXA41E710 | (b*) 85% Selar® PA3426R +15% Lotader® 4720 | (a*) same as Tie 1 | 28µm 50% Lotryl® 20MA08 + 48% Vistamaxx® 3980FL + 2% Polybatch® SAB-1982VA |
| | 44% Hybrar® 7125 + 52% EMAC® 2207 + 2% Safoam® FP-20 + 2% Polybatch® SAB-1982VA | 65% Hybrar® 7125 + 34% EMAC® 2207 + 1% Safoam® FP-20 | 65% Hybrar® 7125 + 34% EMAC® 2207 + 1% Safoam® FP-20 | | | | |
| **X3357-2 (175µm)** | 144µm | | | (a*) 80% Lotryl® 18MA02 + 20% Bynel® CXA41E710 | (b*) 85% Selar® PA3426R +15% Lotader® 4720 | (a*) same as Tie 1 | 19µm 50% Lotryl® 20MA08 + 48% Vistamaxx® 3980FL + 2% Polybatch® SAB-1982VA |
| | 44% Hybrar® 7125 + 50% EMAC® 2207 + 3% Safoam® FP-20 + 3% Polybatch® SAB-1982VA | 65% Hybrar® 7125 + 34% EMAC® 2207 + 1% Safoam® FP-20 | 65% Hybrar® 7125 + 34% EMAC® 2207 + 1% Safoam® FP-20 | | | | |
| **X3438 (277µm)** | 245µm | | | (a*) 80% Lotryl® 18MA02 + 20% Bynel® CXA41E710 | (b*) 85% Selar® PA3426R +15% Lotader® 4720 | (a*) same as Tie 1 | 20µm 50% Lotryl® 20MA08 + 48% Vistamaxx® 3980FL + 2% Polybatch® SAB-1982VA |
| | 50% Hybrar® 7125 + 46% Lotryl® 20MA08 + 0.8% Expancel® 920DU40 + 1% Hydrobrite®550 + 2.2% Polybatch® SAB-1982VA | 64.2% Hybrar®, 7125 + 34% EMAC® 2207 + 0.8% Expancel® 920DU40 + 1% Hydrobrite® 550 | 64.2% Hybrar®, 7125 + 34% EMAC® 2207 + 0.8% Expancel® 920DU40 + 1% Hydrobrite® 550 | | | | |
| **X3537 (221µm)** | 187µm | | | (a*) 80% Lotryl® 18MA02 + 20% Bynel® CXA41E710 | (b*) 85% Selar® PA3426R +15% Lotader® 4720 | (a*) same as Tie 1 | 22µm 98% EMAC® 2207 + 2% Polybatch® SAB-1982VA |
| | 51.5% Hybrar® 7125 + 45% Lotryl® 20MA08 + 1% Expancel® 920DU40 + 0.5% Hydrobrite®550 + 2% Polybatch® SAB-1982VA | 64.5% Hybrar® 7125 + 34% EMAC® 2207 + 1% Expancel® 920DU40 + 0.5% Hydrobrite® 550 | 64.5% Hybrar® 7125 + 34% EMAC® 2207 + 1% Expancel® 920DU40 + 0.5% Hydrobrite® 550 | | | | |
| **X3609C (200µm)** | 158µm | | | (a*) 80% Lotryl® 18MA02 + 20% Bynel® CXA41E710 | (b*) 85% Selar® PA3426R +15% Lotader® 4720 | (a*) same as Tie 1 | 30µm 98% EMAC® 2207 + 2% Polybatch® SAB-1982VA |
| | 51.4% Hybrar® 7125 + 44% Lotryl® 20MA08 + 2.6% (EV(920DU)50) + 2% Polybatch® SAB-1982VA | 65% Hybrar® 7125 + 32.4% EMAC® 2207 + 2.6% (EV (920DU)50) | 65% Hybrar® 7125 + 32.4% EMAC® 2207 + 2.6% (EV (920DU)50) | | | | |
| **X3610 (204µm)** | 167µm | | | (a*) 80% Lotryl® 18MA02 + 20% Bynel® CXA41E710 | (b*) 85% Selar® PA3426R +15% Lotader® 4720 | (a*) same as Tie 1 | 25µm 98% EMAC® 2207 + 2% Polybatch® SAB-1982VA |
| | 46% Hybrar® 7125 + 39% Lotryl® 20MA08 + 2.6% (EV(920DU)50) + 2.4% Polybatch® SAB-1982VA + 10% Color MB | 65% Hybrar® 7125 + 32.4% EMAC® 2207 + 2.6% (EV (920DU)50) | 65% Hybrar® 7125 + 32.4% EMAC® 2207 + 2.6% (EV (920DU)50) | | | | |
| **X3629 (199µm)** | 165µm | | | (a*) 80% Lotryl® 18MA02 + | (b*) 85% Selar® | (a*) same as | 22µm 98% EMAC® 2207 + 2% |
| | 46% Vistamaxx® | 65% Hybrar®, | 65% Hybrar®, | | | | |
| | 6102+ 49.4% EMAC® 2207+2.6% (EV(920DU)50) +2% Polybatch® SAB-1982VA | 7125 + 32.4% EMAC® 2207+2.6% (EV (920DU)50) | 7125 + 32.4% EMAC® 2207 +2.6% (EV (920DU)50) | 20% Bynel® CXA41E710 | PA3426R +15% Lotader® 4720 | Tie 1 | Polybatch® SAB-1982VA |
| **X3630 (198µm)** | 163µm | | | (a*) 80% Lotryl® 18MA02 + 20% Bynel® CXA41E710 | (b*) 85% Selar® PA3426R +15% Lotader® 4720 | (a*) same as Tie 1 | 23µm 98% EMAC® 2207 + 2% Polybatch® SAB-1982VA |
| | 57.2% Infuse® D9107.10 + 38.2% Elvax® 450 + 2.6% (EV(920DU)50) + 2% Polybatch® SAB-1982VA | 65% Hybrar® 7125 + 32.4% EMAC® 2207+2.6% (EV (920DU)50) | 65% Hybrar® 7125 + 32.4% EMAC® 2207+2.6% (EV (920DU)50) | | | | |
| **X3631 (201 µm)** | 170µm | | | (a*) 80% Lotryl® 18MA02 + 20% Bynel® CXA41E710 | (b*) 85% Selar® PA3426R +15% Lotader® 4720 | (a*) same as Tie 1 | 19µm 75% Elvax® 450 + 24% Elvax® 3170A + 1% Polybatch® SAB-1982VA |
| | 51% Vistamaxx® 6102 + 44% Elvax® 450 + 3% (EV(920DU)50) +2% Polybatch® SAB-1982VA | 65% Hybrar® 7125 + 32.4% EMAC® 2207+2.6% (EV (920DU)50) | 65% Hybrar® 7125 + 32.4% EMAC®220 7 + 2.6% (EV (920DU)50) | | | | |
| **X3632 (200µm**) | 168µm | | | (a*) 80% Lotryl® 18MA02 + 20% Bynel® CXA41E710 | (b*) 85% Selar® PA3426R +15% Lotader® 4720 | (a*) same as Tie 1 | 20µm 99% EMAC® 2207 + 1% Polybatch® SAB-1982VA |
| | 46% Vistamaxx® 6102+ 49% EMAC® 2207+3% (EV(920DU)50) +2% Polybatch® SAB-1982VA | 68% Vistamaxx® 6102+29% EMAC® 2207+3% (EV (920DU)50) | 68% Vistamaxx 6102+29% EMAC® 2207+3% (EV (920DU)50) | | | | |
| **X3633 (201 µm)** | 168µm | | | (a*) 80% Lotryl® 18MA02 + 20% Bynel® CXA41E710 | (b*) 85% Selar® PA3426R +15% Lotader® 4720 | (a*) same as Tie 1 | 21µm 99% EMAC® 2207 + 1% Polybatch® SAB-1982VA |
| | 46% Vistamaxx® 6102+ 47% EMAC® 2207+5% (EV(920DU)50) +2% Polybatch® SAB-1982VA | 68% Vistamaxx® 6102+29% EMAC® 2207+3% (EV (920DU)50) | 68% Vistamaxx® 6102+29% EMAC® 2207+3% (EV (920DU)50) | | | | |
| **X3634 (200µm)** | 168µm | | | (a*) 80% Lotryl® 18MA02 + 20% Bynel® CXA41E710 | (b*) 85% Selar® PA3426R +15% Lotader® 4720 | (a*) same as Tie 1 | 19µm 99% EMAC® 2207 + 1 % Polybatch® SAB-1982VA |
| | 46% Vistamaxx® 6102+ 47% EMAC® 2207+5% (EV(920DU)50) +2% Polybatch® SAB-1982VA | 65% Hybrar® 7125 + 32.4% EMAC® 2207+2.6% (EV (920DU)50) | 65% Hybrar® 7125 + 32.4% EMAC® 2207+2.6% (EV (920DU)50) | | | | |
| | | | | | | | |

| **Sample Code** | **Skin** | **Inner-2** | **Tie 1** | **Barrier** | **Tie 2** | **Inner-1** | **Seal** |
|---|---|---|---|---|---|---|---|
| **X3635 (205µm)** | 136µm 46% Vistamaxx® 6102+ 47% EMAC® 2207+5% (EV(920DU)50) +2% Polybatch® SAB-1982VA | 16µm 65% Hybrar® 7125 + 32.4% EMAC® 2207+2.6% (EV (920DU)50) | (a*) 80% Lotryl® 18MA02 + 20% Bynel® CXA41 E710 | (b*) 85% Selar® PA3426R + 15% Lotader® 4720 | (a*) same as Tie 1 | 19µm 65% Hybrar® 7125+ 32.4% EMAC® 2207 + 2.6% (EV (920DU)50) | 22µm 99% EMAC® 2207 + 1% Polybatch® SAB-1982VA |
| **X3651 (196µm)** | 134µm 46% Vistamaxx® 6102+ 47% EMAC® | 15µm 55% Hybrar® 7125+45% EMAC® | (a*) 80% Lotryl® 18MA02 + 20% Bynel® CXA41 E710 | (b*) 85% Selar® PA3426R + 15% Lotader® | (a*) same as Tie 1 | 18µm 55% Hybrar® 7125+45% EMAC® | 17µm 99% EMAC® 2207 + 1% Polybatch® SAB-1982VA |
| | 2207+5% (EV(920DU)50) +2% Polybatch® SAB-1982VA | 2207 | | 4720 | | 2207 | |
| **X3652 (210µm)** | 141µm 46% Vistamaxx® 6102+ 47% EMAC® 2207+5% (EV(920DU)50) +2% Polybatch® SAB-1982VA | 17µm 55% Hybrar® 7125+45% EMAC® 2207 | (a*) 80% Lotryl® 18MA02 + 20% Bynel® CXA41E710 | (b*) 85% Selar® PA3426R + 15% Lotader® 4720 | (a*) same as Tie 1 | 19µm 55% Hybrar® 7125+45% EMAC® 2207 | 21µm 40% Vistamaxx® 3980FL + 58% Lotryl® 20MA08+ 2% Polybatch® SAB-1982VA |
| **X3653 (202µm)** | 129µm 46% Vistamaxx® 6102+ 49.4% EMAC® 2207+2.6% (EV(920DU)50) +2% Polybatch® SAB-1982VA | 16µm 65% Hybrar® 7125 + 32.4% EMAC® 2207+2.6% (EV (920DU)50) | (a*) 80% Lotryl® 18MA02 + 20% Bynel® CXA41 E710 | (b*) 85% Selar® PA3426R + 15% Lotader® 4720 | (a*) same as Tie 1 | 19µm 65% Hybrar® 7125 + 32.4% EMAC® 2207+2.6% (EV (920DU)50) | 26µm 40% Vistamaxx® 3980FL + 58% Lotryl® 20MA08+ 2% Polybatch® SAB-1982VA |
| **X3654 (144µm)** | 74µm 46% Vistamaxx® 6102+ 47% EMAC® 2207+5% (EV(920DU)50) +2% Polybatch® SAB-1982VA | 13µm 55% Hybrar® 7125+45% EMAC® 2207 | (a*) 80% Lotryl® 18MA02 + 20% Bynel® CXA41E710 | (b*) 85% Selar® PA3426R + 15% Lotader® 4720 | (a*) same as Tie 1 | 17µm 55% Hybrar® 7125+45% EMAC® 2207 | 28µm 40% Vistamaxx® 3980FL + 58% Lotryl® 20MA08+ 2% Polybatch® SAB-1982VA |
| **X3655 (198µm)** | 130µm 46% Vistamaxx® 3980FL + 47% Lotry® 20MA08+5% (EV(920DU)50) +2% Polybatch® SAB-1982VA | 14µm 55% Hybrar® 7125+45% EMAC® 2207 | (a*) 80% Lotryl® 18MA02 + 20% Bynel® CXA41 E710 | (b*) 85% Selar® PA3426R + 15% Lotader® 4720 | (a*) same as Tie 1 | 17µm 55% Hybrar® 7125+45% EMAC® 2207 | 25µm 40% Vistamaxx® 3980FL + 58% Lotryl® 20MA08+ 2% Polybatch® SAB-1982VA |
| **X3656 (153µm)** | 90µm 46% Vistamaxx® 3980FL + 47% Lotryl® 20MA08+5% (EV(920DU)50) +2% Polybatch® SAB-1982VA | 15µm 55% Hybrar® 7125+45% EMAC® 2207 | (a*) 80% Lotryl® 18MA02 + 20% Bynel® CXA41 E710 | (b*) 85% Selar® PA3426R + 15% Lotader® 4720 | (a*) same as Tie 1 | 14µm 55% Hybrar® 7125+45% EMAC® 2207 | 22µm 40% Vistamaxx® 3980FL + 58% Lotryl® 20MA08+ 2% Polybatch® SAB-1982VA |
| **X3657 (202µm)** | 130µm 47% Vistamaxx® 3980FL + 47% Lotryl® 20MA08+4% Expancel® 950MB80+2% Polybatch® SAB-1982VA | 15µm 55% Hybrar 7125+45% EMAC2207 | (a*) 80% Lotryl® 18MA02 + 20% Bynel® CXA41E710 | (b*) 85% Selar® PA3426R + 15% Lotader® 4720 | (a*) same as Tie 1 | 18µm 55% Hybrar® 7125+45% EMAC® 2207 | 27µm 40% Vistamaxx® 3980FL + 58% Lotryl® 20MA08+ 2% Polybatch® SAB-1982VA |
| **X3706 (148µm)** | 88µm 46% Vistamaxx® 3980FL + 47% Elvaloy® AC1820+5% (EV(920DU)50) +2% Polybatch® SAB-1982VA | 15µm 65% Hybrar® 7125+35% Elvaloy® AC1820 | (a*) 80% Lotryl® 18MA02 + 20% Bynel® CXA41E710 | (b*) 85% Selar® PA3426R + 15% Lotader® 4720 | (a*) same as Tie 1 | 11µm 65% Hybrar® 7125+35% Elvaloy® AC1820 | 19µm 99% EMAC® 2207 + 1% Polybatch® SAB-1982VA |
| **X3707 (158µm)** | 86µm 46% Vistamaxx® 6202FL + 47% Elvaloy® AC1820+5% (EV(920DU)50) +2% Polybatch® SAB-1982VA | 15µm 65% Hybrar® 7125+35% Elvaloy® AC1820 | (a*) 80% Lotryl® 18MA02 + 20% Bynel® CXA41E710 | (b*) 85% Selar® PA3426R + 15% Lotader® 4720 | (a*) same as Tie 1 | 16µm 65% Hybrar® 7125+35% Elvaloy® AC1820 | 23µm 99% EMAC® 2207 + 1% Polybatch® SAB-1982VA |
| **X3708 (155µm)** | 86µm 61% Vistamaxx® 6202FL+ 32% Elvaloy® AC 1820+5% (EV(920DU)50) +2% Polybatch® SAB-1982VA | 14µm 65% Hybrar® 7125+35% Elvalo® AC1820 | (a*) 80% Lotryl® 18MA02 + 20% Bynel® CXA41E710 | (b*) 85% Selar® PA3426R + 15% Lotader® 4720 | (a*) same as Tie 1 | 21µm 65% Hybrar® 7125+35% Elvaloy® AC1820 | 30µm 99% EMAC® 2207 + 1% Polybatch® SAB-1982VA |
| **X3709 (157µm)** | 84µm 61% Vistamaxx® 6202FL+ 32% Elvaloy® AC 1820+5% (EV(920DU)50) +2% Polybatch® SAB-1982VA | 18µm 64% Hybrar® 5127+ 34% Vistamaxx® 6202+2% Preadd® AO 181 | (a*) 80% Lotryl® 18MA02 + 20% Bynel® CXA41E710 | (b*) 85% Selar® PA3426R + 15% Lotader® 4720 | (a*) same as Tie 1 | 17µm 64% Hybrar® 5127+ 34% Vistamaxx® 6202+2% Preadd AO 181 | 21µm 99% EMAC® 2207 + 1% Polybatch® SAB-1982VA |
| **X3710 (146µm)** | 88µm 51% Hybrar® 7125+42% Lotryl® 20MA08+5% (EV(920DU)50) +2% Polybatch® SAB-1982VA | 16µm 64% Hybrar® 5127+ 34% Vistamaxx® 6202+2% Preadd® AO 181 | (a*) 80% Lotryl® 18MA02 + 20% Bynel® CXA41E710 | (b*) 85% Selar® PA3426R + 15% Lotader® 4720 | (a*) same as Tie 1 | 16µm 64% Hybrar® 5127+ 34% Vistamaxx® 6202+2% Preadd® AO 181 | 21µm 99% EMAC® 2207 + 1% Polybatch® SAB-1982VA |
| **X3711 (146µm)** | 83µm 51% Hybrar® 7125+42% Lotryl® 20MA08+5% (EV(920DU)50) +2% Polybatch® SAB-1982VA | 17µm 65% Vistamaxx® 6102+35% Lotryl® 20MA08 | (a*) 80% Lotryl® 18MA02 + 20% Bynel® CXA41E710 | (b*) 85% Selar® PA3426R + 15% Lotador® 4720 | (a*) same as Tie 1 | 14µm 65% Vistamaxx® 6102+35% Lotryl® 20MA08 | 22µm 99% EMAC® 2207 + 1% Polybatch® SAB-1982VA |
| **X3712 (150µm)** | 85µm 51% Hybrar® 7125+42% Lotryl® 20MA08+5% (EV(920DU)50) +2% Polybatch® SAB-1982VA | 18µm 85% Vistamaxx® 3980+15% Lotryl® 20MA08 | (a*) 80% Lotryl® 18MA02 + 20% Bynel® CXA41E710 | (b*) 85% Selar® PA3426R + 15% Lotader® 4720 | (a*) same as Tie 1 | 14µm 85% Vistamaxx® 3980+15% Lotryl® 20MA08 | 24µm 99% EMAC® 2207 + 1% Polybatch® SAB-1982VA |
| **X3713 (130µm)** | 81µm 47% Vistamaxx® 3980+46% Lotryl® 20MA08+5% (EV(920DU)50) +2% Polybatch® SAB-1982VA | 18µm 64% Hybrar® 5127+ 34% Vistamaxx® 6202+2% Preadd® AO 181 | (a*) 80% Lotryl® 18MA02 + 20% Bynel® CXA41E710 | (b*) 85% Selar® PA3426R + 15% Lotader® 4720 | (a*) same as Tie 1 | 12µm 64% Hybrar® 5127+ 34% Vistamaxx® 6202+2% Preadd® AO 181 | 19µm 99% EMAC® 2207 + 1% Polybatch® SAB-1982VA |
| **X3714 (148µm)** | 68µm 38% Vistamaxx® 3980+57.5% Lotryl® 20MA08+2.5% (EV(920DU)50) +2% Polybatch® SAB-1982VA | 17µm 64% Hybrar® 5127+ 34% Vistamaxx® 6202+2% Preadd® AO 181 | (a*) 80% Lotryl® 18MA02 + 20% Bynel® CXA41E710 | (b*) 85% Selar® PA3426R + 15% Lotader® 4720 | (a*) same as Tie 1 | 21µm 64% Hybrar® 5127+ 34% Vistamaxx® 6202+2% Preadd® AO 181 | 9µm 99% EMAC® 2207 + 1% Polybatch® SAB-1982VA |
| **X3715 (160µm)** | 69µm 38% Vistamaxx® 3980+56.5% Elvaloy® AC1820+2.5% (EV(920DU)50) +2% Polybatch® SAB-1982VA +1% Polyone® FDM 55802 | 42µm 65% Hybrar® 7125+35% Elvaloy® AC1820 | (a*) 80% Lotryl® 18MA02 + 20% Bynel® CXA41E710 | (b*) 85% Selar® PA3426R + 15% Lotader® 4720 | (a*) same as Tie 1 | 13µm 65% Hybrar® 7125+35% Elvaloy® AC1820 | 11µm 99% EMAC® 2207 + 1% Polybatch® SAB-1982VA |
| **X3716 (151µm)** | 72µm 38% Vistamaxx® 3980+57% Elvaloy® AC1820+1.5% (EV(920DU)50)+2% Polybatch® SAB-1982VA +1.5% Polyone® FDM 55802 | 39µm 65% Hybrar® 7125+35% Elvaloy® AC1820 | (a*) 80% Lotryl® 18MA02 + 20% Bynel® CXA41E710 | (b*) 85% Selar® PA3426R + 15% Lotader® 4720 | (a*) same as Tie 1 | 13µm 65% Hybrar® 7125+35% Elvaloy® AC1820 | 14µm 99% EMAC® 2207 + 1% Polybatch® SAB-1982VA |
| **X3717 (157µm)** | 69µm 38% Vistamaxx® 3980+56.5% Elvaloy® AC1820+1.5% (EV(920DU)50) +2% Polybatch® SAB-1982VA +2% Polyone® FDM 55802 | 43µm 65% Hybrar® 7125+35% Elvaloy® AC1820 | (a*) 80% Lotryl® 18MA02 + 20% Bynel® CXA41 E710 | (b*) 85% Selar® PA3426R + 15% Lotader® 4720 | (a*) same as Tie 1 | 10µm 65% Hybrar® 7125+35% Elvaloy® AC1820 | 15µm 99% EMAC® 2207 + 1% Polybatch® SAB-1982VA |

| | | | | | | | |
|---|---|---|---|---|---|---|---|
| **a*, thickness** - **3 µm** to **5µm b*, thickness** - 3 **µm to 5µm** | | | | | | | |

The first 15 samples in Table 4 (X3299-1, X3300-1, X3301-1, X3356-1, X3357-2, X3438, X3537, X3609C, X3610, X3629, X3630, X3631, X3632, X3633, X3634) were seven layer films having a foam /foam/foam/tie/barrier/tie/seal configuration similar to the seven-layer film 140 of FIG. 4. Each of the foam layers included a foaming agent, such as, Safoam® FP-20, Expancel® 950MB80, Expancel®920DU40 from Akzo, or EV(920DU)50 from Polychem Dispersion.

Samples X3299-1, X3300-1, and X3301-1 were made using the same materials as samples X3299, X3300, X3301, respectively, but were configured to have a different thickness. X3299-1 had a total thickness of about 280µm ± 10%, in which the three foam layers together had a thickness of about 232µm ± 10%, each of the barrier and tie layers had a thickness of about 3-5µm ± 10%, and the seal layer had a thickness of about 25µm ± 10%. All thicknesses provided in Table 4 had a tolerance of ± 10%, thus, the tolerance will not be repeated hereinbelow. X3300-1 had a total thickness of about 288µm, in which the three foam layers together had a thickness of about 232µm, each of the barrier and tie layers had a thickness of about 3-5µm, and the seal layer had a thickness of about 25 µm. X3301-1 had a total thickness of about 294µm, in which the three foam layers together had a thickness of about 261 µm, each of the barrier and tie layers had a thickness of about 3-5 µm, and the seal layer had a thickness of about 17µm.

Sample X3356-1 had a total thickness of about 249µm, in which the three foam layers together had a thickness of about 209µm, each of the barrier and tie layers had a thickness of about 3-5µm, and the seal layer had a thickness of about 28µm. The outer foam layer was formed from a blend comprising about 44 wt.% of vinyl-bond rich SEPS block copolymer (Hybrar® 7125), about 52 wt.% of EMA (EMAC® 2207), about 2 wt.% of blowing agent (Safoam® FP-20), and about 2 wt.% of slip and antiblock agent (Polybatch® SAB-1982VA). Each of the two inner foam layers was formed from a blend comprising about 65 wt.% of vinyl-bond rich SEPS block copolymer (Hybrar® 7125), about 34 wt.% of EMA (EMAC® 2207), and about 1 wt.% of blowing agent (Safoam® FP-20). Each of the two tie layers was formed from a blend comprising about 80 wt.% EMA (Lotryl® 18MA02) and about 20 wt.% MAH grafted LLDPE (Bynel® CXA41E710). The barrier layer was formed from a blend comprising about 85 wt.% amorphous polyamide (Selar® PA3426R) and about 15 wt.% functionalized rubber blend (Lotader® 4720). The seal layer was formed from a blend comprising about 50 wt.% of EMA (Lotryl® 20MA08), about 48 wt.% of PP-elastomers (Vistamaxx® 3980FL), and about 2 wt.% of a slip and antiblock agent (Polybatch® SAB-1982VA).

Sample X3357-2 had a total thickness of about 175µm, in which the three foam layers together had a thickness of about 144µm, each of the barrier and tie layers had a thickness of about 3-5µm, and the seal layer had a thickness of about 19µm. The outer foam layer was formed from a blend comprising about 44 wt.% of vinyl-bond rich SEPS block copolymer (Hybrar® 7125), about 50 wt.% of EMA (EMAC® 2207), about 3 wt.% of blowing agent (Safoam® FP-20), and about 3 wt.% of slip and antiblock agent (Polybatch® SAB-1982VA). The two inner foam layers, two tie layers, barrier layer, and seal layer were formed from the same polymer blends used to make the respective layers of X3356-1.

Sample X3438 had a total thickness of about 277µm, in which the three foam layers together had a thickness of about 245 µm, each of the barrier and tie layers had a thickness of about 3-5µm, and the seal layer had a thickness of about 20µm. The outer foam layer was formed from a blend comprising about 50 wt.% of vinyl-bond rich SEPS block copolymer (Hybrar® 7125), about 46 wt.% of EMA (Lotryl® 20MA08), about 0.8 wt.% of foam microspheres (Expancel® 920DU40), 1% white mineral oil (Hydrobrite® 550 from Sonneborn), and about 2.2 wt.% of slip and antiblock agent (Polybatch® SAB-1982VA). Each of the two inner foam layers was formed from a blend comprising about 64.2 wt.% of vinyl-bond rich SEPS block copolymer (Hybrar® 7125), about 34 wt.% of EMA (EMAC® 2207), and about 0.8 wt.% of foam microspheres (Expancel® 920DU40), 1% white mineral oil (Hydrobrite® 550). The two tie layers, barrier layer, and seal layer were formed from the same polymer blends used to make the respective layers of X3356-1.

Sample X3438 had a total thickness of about 277µm, in which the three foam layers together had a thickness of about 245 µm, each of the barrier and tie layers had a thickness of about 3-5µm, and the seal layer had a thickness of about 20µm. The outer foam layer was formed from a blend comprising about 50 wt.% of vinyl-bond rich SEPS block copolymer (Hybrar® 7125), about 46 wt.% of EMA (Lotryl® 20MA08), about 0.8 wt.% of foam microspheres (Expancel® 920DU40), 1% white mineral oil (Hydrobrite® 550 from Sonneborn), and about 2.2 wt.% of slip and antiblock agent (Polybatch® SAB-1982VA). Each of the two inner foam layers was formed from a blend comprising about 64.2 wt.% of vinyl-bond rich SEPS block copolymer (Hybrar® 7125), about 34 wt.% of EMA (EMAC® 2207), and about 0.8 wt.% of foam microspheres (Expancel® 920DU40), 1% white mineral oil (Hydrobrite® 550). The two tie layers, barrier layer, and seal layer were formed from the same polymer blends used to make the respective layers of X3356-1.

Similarly, samples X3537, X3609C, X3610, X3629, X3630, X3631, X3632, X3633, and X3634 were formed using polymer blends. The film constructions of these samples are summarized in Table 4 above. As shown, at least one foam layer of the film samples disclosed in Table 4 included vinyl-bond rich SEPS block copolymer (Hybrar® 7125), except samples X3632 and X3633, which did not include a vinyl-bond rich triblock copolymer in any of the layers.

Sample X3632 had a total thickness of about 200µm, in which the three foam layers together had a thickness of about 168µm, each of the barrier and tie layers had a thickness of about 3-5µm, and the seal layer had a thickness of about 20µm. The outer foam layer was formed from a blend comprising about 46 wt.% of ethylene-propylene copolymer (Vistamaxx® 6102), about 49 wt.% of EMA (EMAC® 2207), about 3 wt.% of masterbatch containing 50% Expancel® 920DU40 microspheres (EV(920DU)50), and about 2 wt.% of slip and antiblock agent (Polybatch® SAB-1982VA). Each of the two inner foam layers was formed from a blend comprising about 68 wt.% of ethylene-propylene copolymer (Vistamaxx® 6102), about 29 wt.% of EMA (EMAC® 2207), and about 3 wt.% of masterbatch containing 50% Expancel® 920DU40 microspheres (EV(920DU)50). The two tie layers and barrier layer were formed from the same polymer blends used to make the respective layers of X3356-1. The seal layer was formed of a blend comprising about 99 wt.% of EMA (EMAC® 2207) and about 1 wt.% of a slip and antiblock agent (Polybatch® SAB-1982VA).

Sample X3633 had a total thickness of about 201µm, in which the three foam layers together had a thickness of about 168µm, each of the barrier and tie layers had a thickness of about 3-5µm, and the seal layer had a thickness of about 21µm. The outer foam layer was formed from a blend comprising about 46 wt.% of ethylene-propylene copolymer (Vistamaxx® 6102), about 47 wt.% of EMA (EMAC® 2207), about 5 wt.% of masterbatch containing 50% Expancel® 920DU40 microspheres (EV(920DU)50), and about 2 wt.% of slip and antiblock agent (Polybatch® SAB-1982VA). The two inner foam layers, two tie layers, barrier layer, and seal layer were formed from the same polymer blends used to make the respective layers of X3632.

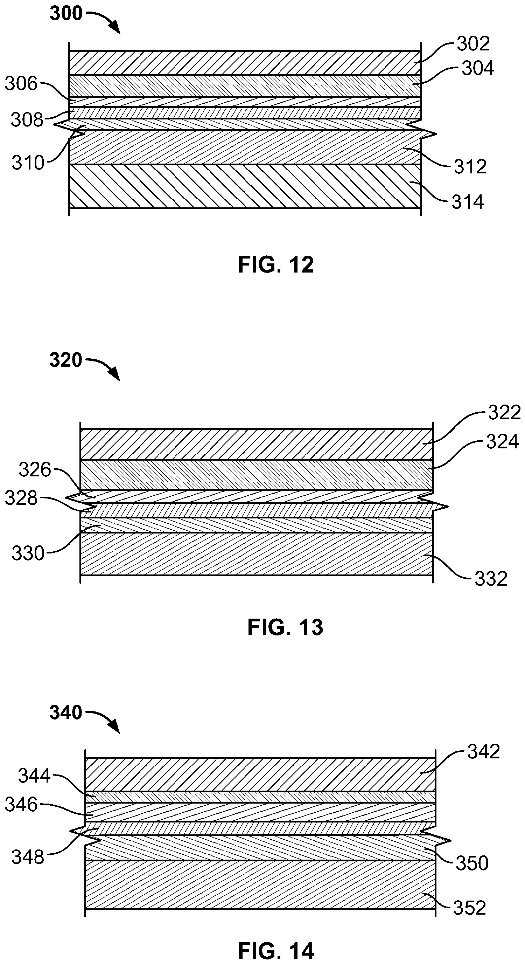

Samples X3635, X3651, X3652, X3653, X3654, X3655, X3656, X3657, X3706, X3707, X3708, X3709, X3710, X3711, X3712, X3713, X3714, X3715, X3716, and X3717 were also seven-layer films, but these film samples had a different film construction than the foregoing film samples. These film samples had a seal (302)/inner-1 (304)/tie (306)/ barrier (308)/tie (310)/inner-2 (312)/outer foam (314) construction similar to a multilayer film 300 shown in FIG. 12. In these samples, the two inner layers may or may not be foam layers. For example, the inner layers of sample X3635 and X3653 were foam layers comprising a foaming agent, while the inner layers of the other samples were not foam layers.

Further, at least one of the outer foam layer and inner layers of these film samples included a vinyl-bond rich triblock copolymer for sound absorbing properties. The film constructions of these samples are summarized in Table 4 above.

Other multilayer film embodiments may include a vinyl-bond rich triblock copolymer in a tie, barrier, or seal layer. The multilayer films may also be configured to have different layer constructions. For examples, a multilayer film may be configured similar to a six-layer film 320 shown in FIG. 13, which has a seal (322)/inner (324)/tie (326)/barrier (328)/tie (330)/foam (332) construction. In another example, a multilayer foam film may have a seal (342)/tie (344)/barrier (346)/tie (348)/inner (350)/foam (352) construction similar to a six-layer film 340 of FIG. 14. The inner layers of these multilayer films may or may not be a foam layer.

Film properties of the multilayer film samples were evaluated and summarized in Table 5.

**TABLE 5 - Film Properties of Multilayer Foam Film Samples**

| **Film Codes** | **Thickness, um** | **Elmendorf Tear, gf/mil** | | **Tensile Strength (psi)** | | **Elongation at Break (%)** | | **Modulus (1000 psi)** | | **Film Noise SPL(A) dB** |
|---|---|---|---|---|---|---|---|---|---|---|
| | | **MD** | **CD** | **MD** | **CD** | **MD** | **CD** | **MD** | **CD** | |
| **X3299-1** | 280 | 209 | 120 | 1000 | 965 | 628 | 746 | 6.8 | 5.5 | 34.8 |
| **X3300-1** | 288 | 217 | 143 | 951 | 937 | 746 | 745 | 5.0 | 4.8 | 32.2 |
| **X3301-1** | 294 | 127 | 89 | 626 | 586 | 532 | 679 | 5.3 | 3.8 | 29.8 |
| **X3356-1** | 249 | 212 | 112 | 1106 | 1035 | 657 | 745 | 7.2 | 6.0 | 31.9 |
| **X3357-2** | 175 | 73 | 45 | 667 | 464 | 264 | 506 | 8.8 | 7.4 | 49.9 |
| **X3438** | 277 | 211 | 140 | 740 | 776 | 544 | 745 | 5.1 | 3.6 | 32.4 |
| **X3537** | 221 | 138 | 59 | 624 | 769 | 362 | 745 | 5.2 | 3.9 | 32.2 |
| **X3609C** | 200 | 199 | 70 | 667 | 841 | 315 | 745 | 5.8 | 4.7 | 37.8 |
| **X3610** | 204 | 192 | 87 | 653 | 841 | 315 | 745 | 6.1 | 5.0 | 40.5 |
| **X3629** | 199 | 88 | 48 | 769 | 870 | 405 | 745 | 7.7 | 7.0 | 36.6 |
| **X3630** | 198 | 94 | 58 | 769 | 812 | 251 | 745 | 9.1 | 6.9 | 38.8 |
| **X3631** | 201 | 141 | 25 | 740 | 1059 | 291 | 745 | 7.9 | 6.4 | 41.8 |
| **X3632** | 200 | 99 | 21 | 957 | 972 | 669 | 741 | 5.0 | 4.9 | 37.3 |
| **X3633** | 201 | 85 | 20 | 754 | 812 | 470 | 703 | 5.6 | 4.5 | 35.8 |
| **X3634** | 200 | 107 | 20 | 653 | 827 | 289 | 727 | 6.0 | 5.5 | 37.9 |
| **X3635** | 205 | 164 | 29 | 769 | 914 | 448 | 734 | 5.4 | 4.2 | 38.0 |
| **X3651** | 196 | 151 | 28 | 812 | 899 | 554 | 717 | 5.0 | 4.2 | 37.0 |
| **X3652** | 210 | 180 | 40 | 986 | 957 | 641 | 738 | 5.6 | 4.4 | 40.3 |
| **X3653** | 202 | 189 | 31 | 1015 | 1059 | 597 | 737 | 6.3 | 5.6 | 41.7 |
| **X3654** | 144 | 151 | 35 | 943 | 1030 | 489 | 732 | 5.7 | 4.9 | 44.2 |
| **X3655** | 198 | 179 | 50 | 827 | 769 | 537 | 619 | 7.8 | 6.5 | 36.3 |
| **X3656** | 153 | 153 | 43 | 972 | 841 | 524 | 607 | 8.1 | 6.5 | 38.8 |
| **X3657** | 202 | 87 | 44 | 667 | 479 | 452 | 475 | 6.7 | 5.1 | 32.1 |
| **X3706** | 148 | 139 | 37 | 1218 | 1247 | 588 | 708 | 8.3 | 7.4 | 43.7 |
| **X3707** | 158 | 156 | 77 | 783 | 885 | 340 | 743 | 5.7 | 4.7 | 46.5 |
| **X3708** | 155 | 55 | 62 | 783 | 885 | 370 | 744 | 5.5 | 4.8 | 44.3 |
| **X3709** | 157 | 22 | 21 | 682 | 827 | 331 | 654 | 5.5 | 4.6 | 48.8 |
| **X3710** | 146 | 73 | 58 | 624 | 682 | 306 | 641 | 4.1 | 3.3 | 46.6 |
| **X3711** | 146 | 75 | 42 | 1088 | 899 | 698 | 742 | 4.5 | 3.5 | 48.3 |
| **X3712** | 150 | 171 | 79 | 1131 | 1044 | 602 | 718 | 6.4 | 5.4 | 45.1 |
| **X3713** | 130 | 78 | 34 | 841 | 885 | 381 | 603 | 7.2 | 5.9 | 40.6 |
| **X3714** | 148 | 32 | 30 | 783 | 943 | 363 | 649 | 6.7 | 5.5 | 40.5 |
| **X3715** | 160 | 87 | 30 | 754 | 783 | 637 | 435 | 4.7 | 5.5 | 41.1 |
| **X3716** | 151 | 96 | 35 | 899 | 986 | 466 | 683 | 5.6 | 5.1 | 41.4 |
| **X3717** | 157 | 108 | 26 | 841 | 1044 | 318 | 709 | 6.8 | 5.9 | 43.6 |

As summarized in Table 4 and Table 5, the multilayer film samples were relatively thin films having a total thickness of about 130µm (5.1mil) to about 300µm (11.8mil), and included at least an outer foam layer and a gas barrier layer. In other embodiments, the multilayer film may be configured to have a total thickness of about 50µm (2.0mil) to about 800µm (31.5mil), preferably about 100µm (3.9mil) to about 500µm (19.7mil), and more preferably about 120µm (4.7mil) to about 350µm (13.8mil). The multilayer film samples had good mechanical properties as exhibited by Elmendorf tear, tensile strength, and elongation at break test result. Further, the multilayer film samples had softness suitable for ostomy, packaging and many other similar applications. The multilayer film samples were tested according to ASTM D882. As summarized in Table 5, the multilayer film samples had a modulus of about 3ksi to about 8ksi. In other embodiments, the multilayer film may have a modulus of about 2ksi to about 40ksi. Further, the multilayer film samples had relatively low film noise levels of about 30dB to about 50dB.

In some embodiments, a multilayer film may comprise at least one foam layer, a gas barrier layer, and at least one tie layer comprising a vinyl-bond rich triblock copolymer. For example, a multilayer film may be a seven-layer film having a schematic cross-sectional view similar to that illustrated in FIG. 12 with a foam layer 314/first inner layer 312/first tie layer 310/gas barrier layer 308/second tie layer 306/second inner layer 304/seal layer 302 construction, in which the first and second tie layers comprise a vinyl-bond rich triblock copolymer. Samples of such seven-layer films were prepared and tested for their mechanical and sound absorbing properties. The details of the seven-layer film samples are summarized in Table 6.

**TABLE 6 - Seven-Layer Film Samples**

| **Sample Code** | **Foam 1** | **Inner 1** | **Tie 1** | **Barrier** | **Tie 2** | **Inner 2** | **Seal** |
|---|---|---|---|---|---|---|---|
| **X3747** | **79µm** 85% EMAC® 2207 + 8% Maxithen® EVA 8AA0621F Beige+ 2% Polybatch® AMF 905+ 3% (EV(920DU)50) +2% Schulman® SAB1982VA | **13µm** 75% Vistamaxx® 3980+ 25% Elvaloy® AC1820 | **14µm)** 39% Hybrar® 5127+ 39% Hybrar® 7125+ 20% Bynel® CXA41E710 + 2% Preadd® AO181 | **4µm** Blend: 85% Selar® PA3426R +15% Lotader® 4720 | **17µm** 39% Hybrar® 5127+ 39% Hybrar® 7125+ 20% Bynel® CXA41E710 + 2% Preadd® AO181 | **9µm** 75% Vistamaxx® 3980+ 25% Elvaloy® AC1820 | **15µm** 98.5% EMAC® 2207 + 1.5% Schulman® SAB 1982VA |
| **X3748** | **71µm** 96.5% EMAC® 2207+ 1.5% (EV(920DU)50) + 2% Schulman® SAB1982VA | **12µm** 75% Vistamaxx® 3980+ 25% Elvaloy® AC1820 | **13µm** 39% Hybrar® 5127+ 39% Hybrar® 7125+ 20% Bynel® CXA41E710 + 2% Preadd® AO181 | **4µm** Blend: 85% Selar® PA3426R +15% Lotader® 4720 | **17µm** 39% Hybrar® 5127+ 39% Hybrar® 7125+ 20% Bynel® CXA41E710 + 2% Preadd® AO 181 | **9µm** 75% Vistamaxx® 3980+ 25% Elvaloy® AC1820 | **20µm** 98.5% EMAC® 2207 + 1.5% Schulman® SAB 1982VA |
| **X3749** | **77µm** 86.5% EMAC® 2207+ 8% Maxithen® EVA 8AA0621F Beige+ 2% Polybatch® AMF 905+ 1.5% (EV(920DU)50) + 2% Schulman® SAB1982VA | **12µm** 75% Vistamaxx® 3980+ 25% Elvaloy® AC1820 | **14µm)** 39% Hybrar® 5127+ 39% Hybrar® 7125+ 20% Bynel® CXA41E710 + 2% Preadd® AO181 | **4µm** Blend: 85% Selar® PA3426R +15% Lotader® 4720 | **17µm** 39% Hybrar® 5127+ 39% Hybrar® 7125+ 20% Bynel® CXA41E710 + 2% Preadd® AO 181 | **12µm** 75% Vistamaxx® 3980+ 25% Elvaloy® AC1820 | **15µm** 98.5% EMAC® 2207 + 1.5% Schulman® SAB 1982VA |
| **X3750** | **72µm** 94% EMAC® 2207+ 2% Polybatch® AMF 905+ 2% (EV(920DU)50) + 2% Schulman® SAB1982VA | **12µm** 75% Vistamaxx® 3980+ 25% Elvaloy® AC1820 | **14µm** 39% Hybrar® 5127+ 39% Hybrar® 7125+ 20% Bynel® CXA41E710 + 2% Preadd® AO181 | **4µm** Blend: 85% Selar® PA3426R +15% Lotader® 4720 | **16µm** 39% Hybrar® 5127+ 39% Hybrar® 7125+ 20% Bynel® CXA41E710 + 2% Preadd® AO181 | **12µm** 75% Vistamaxx® 3980+ 25% Elvaloy® AC1820 | **14µm)** 98.5% EMAC® 2207 + 1.5% Schulman® SAB 1982VA |
| **X3751** | **74µm** 28% Vistamaxx® 3980+ 19% Vistamaxx® 6202+47.5% Elvaloy® AC1820+ 1.5% (EV(920DU)50) + 2% Schulman® SAB1982VA+ 2% Polyone® FDM 55802 | **13µm** 75% Vistamaxx® 3980+ 25% Elvaloy® AC1820 | **15µm** 39% Hybrar® 5127+ 39% Hybrar® 7125+ 20% Bynel® CXA41E710 +2% Preadd® AO181 | **5µm** Blend: 85% Selar® PA3426R +15% Lotader® 4720 | **14µm** 39% Hybrar® 5127+ 39% Hybrar® 7125+ 20% Bynel® CXA41E710 +2% Preadd® AO181 | **9µm** 75% Vistamaxx® 3980+ 25% Elvaloy® AC1820 | **15µm** 98.5% EMAC® 2207 + 1.5% Schulman® SAB 1982VA |
| **X3801** | **78µm** 94.5% EMAC® 2207+ 2% Polybatch® AMF 905 1.5% (EV(920DU)50) + 2% Schulman® SAB1982VA | **13µm** 75% Vistamaxx® 3980+ 25% Elvaloy® AC1820 | **19µm** 39% Hybrar® 5127+ 39% Hybrar® 7125+ 20% Bynel® CXA41E710 + 2% Preadd® AO181 | **4µm** Blend: 85% Selar® PA3426R +15% Lotader® 4720 | **16µm** 39% Hybrar® 5127+ 39% Hybrar® 7125+ 20% Bynel® CXA41E710 + 2% Preadd® AO181 | **10µm** 75% Vistamaxx® 3980+ 25% Elvaloy® AC1820 | **19µm** 98.5% EMAC® 2207 + 1.5% Schulman® SAB 1982VA |
| **X3804** | **75µm** 93% EMAC® 2207+ 2% Polybatch® AMF 905 + 3% (EV(920DU)50) + 2% Schulman® SAB1982VA | **12µm** 75% Vistamaxx® 3980+ 25% Elvaloy® AC1820 | **13µm** 39% Hybrar® 5127+ 39% Hybrar® 7125+ 20% Bynel® CXA41E710 + 2% Preadd® AO181 | **4µm** Blend: 85% Selar® PA3426R +15% Lotader® 4720 | **14µm** 39% Hybrar® 5127+ 39% Hybrar® 7125+ 20% Bynel® CXA41E710 + 2% Preadd® AO 181 | **12µm** 75% Vistamaxx® 3980+ 25% Elvaloy® AC1820 | **18µm** 98.5% EMAC® 2207 + 1.5% Schulman® SAB 1982VA |
| **X3806** | **75µm** 94% EMAC® 2207+ 2% Polybatch® AMF 905 + 2% (EV(920DU)50) + 2% Schulman® SAB1982VA | **11µm** 75% Vistamaxx® 3980+ 25% Elvaloy® AC1820 | **15µm** 50% Hybrar® 5127+ 30% Hybrar® 7125+ 19% Bynel® CXA41E710 + 1% Preadd® AO181 | **4µm** Blend: 85% Selar® PA3426R +15% Lotader® 4720 | **17µm** 50% Hybrar® 5127+ 30% Hybrar® 7125+ 19% Bynel® CXA41E710 + 1% Preadd® AO 181 | **10µm** 75% Vistamaxx® 3980+ 25% Elvaloy® AC1820 | **15µm** 98.5% EMAC® 2207 + 1.5% Schulman® SAB 1982VA |
| **X3807** | **65µm** 94% EMAC® 2207+ 2% Polybatch® AMF 905 2% (EV(920DU)50) + 2% Schulman® SAB1982VA | **9µm** 75% Vistamaxx® 3980+ 25% Elvaloy® AC1820 | **14µm** 39% Hybrar® 5127+ 39% Hybrar® 7125+ 20% Bynel® CXA41E710 + 2% Preadd® AO 181 | **4µm** Blend: 85% Selar® PA3426R +15% Lotader® 4720 | **14µm** 39% Hybrar® 5127+ 39% Hybrar® 7125+ 20% Bynel® CXA41E710 + 2% Preadd® AO 181 | **8µm** 75% Vistamaxx® 3980+ 25% Elvaloy® AC1820 | **14µm** 98.5% EMAC® 2207 + 1.5% Schulman® SAB 1982VA |
| **X3809** | **73µm** 96% EMAC® 2207+ 2% (EV(920DU)50) + 2% Schulman® SAB1982VA | **9µm** 75% Vistamaxx® 3980+ 25% Elvaloy® AC1820 | **18µm** 50% Hybrar® 5127+ 30% Hybrar® 7125+ 18% Bynel® CXA41E710 + 2% Preadd® AO 181 | **5µm** Blend: 85% Selar® PA3426R +15% Lotader® 4720 | **15µm** 50% Hybrar® 5127+ 30% Hybrar® 7125+ 18% Bynel® CXA41E710 + 2% Preadd® AO 181 | **8µm** 75% Vistamaxx® 3980+ 25% Elvaloy® AC1820 | **13µm** 98.5% EMAC® 2207 + 1.5% Schulman® SAB 1982VA |
| **X3810** | **76µm** 96% EMAC® 2207+ 2% (EV(920DU)50) + 2% Schulman® SAB1982VA | **14µm** 75% Vistamaxx® 3980+ 25% Elvaloy® AC1820 | **15µm** 50% Hybrar® 5127+ 30% Hybrar® 7125+ 18% Bynel® CXA41E710 + 2% Preadd® AO 181 | **4µm** Blend: 85% Selar® PA3426R +15% Lotader® 4720 | **15µm** 50% Hybrar® 5127+ 30% Hybrar® 7125+ 18% Bynel® CXA41E710 + 2% Preadd® AO 181 | **13µm** 75% Vistamaxx® 3980+ 25% Elvaloy® AC1820 | **16µm** 98.5% EMAC® 2207 + 1.5% Schulman® SAB 1982VA |
| **X3811** | **72µm** 95.5% EMAC® 2207+ 2.5% (EV(920DU)50) + 2% Schulman® SAB1982VA | **19µm** 75% Vistamaxx® 3980+ 25% Elvaloy® AC1820 | **12µm** 50% Hybrar® 5127+ 30% Hybrar® 7125+ 18% Bynel® CXA41E710 + 2% Preadd® AO 181 | **4µm** Blend: 85% Selar® PA3426R +15% Lotader® 4720 | **9µm** 50% Hybrar® 5127+ 30% Hybrar® 7125+ 18% Bynel® CXA41E710 + 2% Preadd® AO 181 | **15µm** 75% Vistamaxx® 3980+ 25% Elvaloy® AC1820 | **16µm** 98.5% EMAC® 2207 + 1.5% Schulman® SAB 1982VA |
| **X3813** | **75µm** 88% EMAC® 2207+ 8% Maxithen® UNS8AA3681F + 2% (EV(920DU)50) + 2% Schulman® SAB1982VA | **11µm** 75% Vistamaxx® 3980+ 25% Elvaloy® AC1820 | **17µm** 50% Hybrar® 5127+ 30% Hybrar® 7125+ 18% Bynel® CXA41E710 + 2% Preadd® AO 181 | **4µm** Blend: 85% Selar® PA3426R +15% Lotader® 4720 | **15µm** 50% Hybrar® 5127+ 30% Hybrar® 7125+ 18% Bynel® CXA41E710 + 2% Preadd® AO 181 | **9µm** 75% Vistamaxx® 3980+ 25% Elvaloy® AC1820 | **15µm** 98.5% EMAC® 2207 + 1.5% Schulman® SAB 1982VA |
| **X3814** | **76µm** 86.5% EMAC® 2207+ 9% Maxithen® UNS8AA3681F +2.5% (EV(920DU)50) + 2% Schulman® SAB1982VA | **18µm** 75% Vistamaxx® 3980+ 25% Elvaloy® AC1820 | **10µm** 50% Hybrar® 5127+ 30% Hybrar® 7125+ 18% Bynel® CXA41E710 + 2% Preadd® AO 181 | **4µm** Blend: 85% Selar® PA3426R +15% Lotader® 4720 | **7µm** 50% Hybrar® 5127+ 30% Hybrar® 7125+ 18% Bynel® CXA41E710 + 2% Preadd® AO 181 | **17µm** 75% Vistamaxx® 3980+ 25% Elvaloy® AC1820 | **14µm** 98.5% EMAC® 2207 + 1.5% Schulman® SAB 1982VA |
| **X3815** | **68µm** 86.5% EMAC® 2207+ 9% Maxithen® UNS8AA3681F +2.5% (EV(920DU)50) + 2% Schulman® SAB1982VA | **11µm** 75% Vistamaxx® 3980+ 25% Elvaloy® AC1820 | **8µm** 50% Hybrar® 5127+ 30% Hybrar® 7125+ 18% Bynel® CXA41E710 + 2% Preadd® AO 181 | **4µm** Blend: 85% Selar® PA3426R +15% Lotader® 4720 | **7µm** 50% Hybrar® 5127+ 30% Hybrar® 7125+ 18% Bynel® CXA41E710 + 2% Preadd® AO 181 | **12µm** 75% Vistamaxx® 3980+ 25% Elvaloy® AC1820 | **14µm** 98.5% EMAC® 2207 + 1.5% Schulman® SAB 1982VA |
| **X3816** | **78µm** 86% EMAC® 2207+ 9% Maxithen® UNS8AA3681F + 3% (EV(920DU)50) + 2% Schulman® SAB1982VA | **18µm** 75% Vistamaxx® 3980+ 25% Elvaloy® AC1820 | **7µm** 50% Hybrar® 5127+ 30% Hybrar® 7125+ 18% Bynel® CXA41E710 + 2% Preadd® AO 181 | **4µm** Blend: 85% Selar® PA3426R +15% Lotader® 4720 | **7µm** 50% Hybrar 5127+ 30% Hybrar 7125+ 18% Bynel® CXA41E710 + 2% Preadd® AO 181 | **16µm** 75% Vistamaxx® 3980+ 25% Elvaloy® AC1820 | **14µm** 97% EMAC® 2207 + 3% Polytechs® AB-SL-PE-10N-ER-5 |
| **X3819** | **75µm** 93% EMAC® 2207+ 2% Polybatch® AMF905 3% (EV(920DU)50) + 2% Schulman® SAB1982VA | **20µm** 72% Vistamaxx® 3980+ 10% EMAC® 2207+ 18% Maxithen® UNS8AA36 81F | **10µm** 50% Hybrar® 5127+ 30% Hybrar® 7125+ 18% Bynel® CXA41E710 + 2% Preadd® AO 181 | **3µm** Blend: 85% Selar® PA3426R +15% Lotader® 4720 | **6µm** 50% Hybrar® 5127+ 30% Hybrar® 7125+ 18% Bynel® CXA41E710 + 2% Preadd® AO 181 | **20µm** 72% Vistamaxx® 3980+ 10% EMAC® 2207+ 18% Maxithen® UNS8AA36 81F | **13µm** 98.5% EMAC® 2207 + 1.5% Schulman® SAB 1982VA |

Raw materials used in making the seven-layer film samples in Table 6 are summarized in Table 7.

**TABLE 7 - Raw Materials Used in Seven-layer Film Samples**

| **Raw Material** | **Supplier** | **Description** |
|---|---|---|
| Bynel® CXA41E710 | DuPont | maleated LLDPE |
| Elvaloy® AC 1820 | DuPont | EMA copolymer |
| EMAC® 2207 | West Lake | EMA copolymer |
| Hybrar® 7125 | Kuraray | vinyl-bond rich SEPS block copolymer |
| Hybrar® 5127 | Kuraray | vinyl-bond rich SIS triblock copolymer |
| Lotader® 4720 | Arkema | random terpolymer of ethylene, acrylic ester and maleic anhydride |
| Selar® PA3426R | DuPont | amorphous polyamide |
| Vistamaxx® 3980FL | Exxon | propylene-based elastomer |
| Vistamaxx® 6202FL | Exxon | propylene-based elastomer |
| Schulman® SAB1982VA | A. Schulman | Slip & Antiblock Masterbatch |
| AB SL PE 10N-ER5 | Polytechs | Slip & Antiblock Masterbatch |
| Preadd® AO181 | Premix | Antioxidant Masterbatch |
| EV(920DU)50 | Polychem Dispersion | Foaming Agent |
| Polybatch® AMF 905 | A. Schulman | Processing Aid |
| Polyone® FDM 55802 | Polyone | Processing Aid |
| Maxithen® EVA 8AA0621F | Gabriel Chemie | Color Masterbatch |
| Maxithen® UNS8AA3681F | Gabriel Chemie | Color Masterbatch |

Mechanical and sound absorbing properties of the seven-layer film samples were evaluated - and summarized in Table 8.-

**TABLE 8 - Film Properties of Seven- layer Film Samples**

| **Sample Codes** | **Thickness, um** | **Elmendorf Tear, gf/mil** | | **Tensile Strength (psi)** | | **Elongation at Break (%)** | | **Modulus (1000 psi)** | | **Film Noise SPL(A) dB**** |
|---|---|---|---|---|---|---|---|---|---|---|
| | | **MD** | **CD** | **MD** | **CD** | **MD** | **CD** | **MD** | **CD** | |
| **X3747** | 153 | 102 | 118 | 1015 | 914 | 461 | 632 | 7.8 | 6.0 | 47.2 |
| **X3748** | 149 | 106 | 109 | 1189 | 1262 | 481 | 706 | 8.1 | 6.9 | 46.7 |
| **X3749** | 154 | 132 | 163 | 1291 | 1218 | 544 | 701 | 8.4 | 6.7 | 45.3 |
| **X3750** | 136 | 117 | 121 | 1247 | 1247 | 490 | 680 | 8.7 | 7.3 | 51.0 |
| **X3751** | 145 | 183 | 207 | 1233 | 1291 | 610 | 689 | 8.0 | 6.3 | 49.6 |
| **X3801** | 147 | 130 | 150 | 1162 | 1233 | 473 | 668 | 8.6 | 7.2 | 49.5 |
| **X3804** | 147 | 131 | 214 | 1074 | 995 | 542 | 693 | 6.8 | 5.2 | 49.6 |
| **X3806** | 154 | 103 | 84 | 1162 | 1193 | 502 | 682 | 8.2 | 5.7 | 49.9 |
| **X3807** | 124 | 13 | 70 | 1115 | 1048 | 441 | 659 | 7.4 | 5.9 | 52.5 |
| **X3809** | 146 | 103 | 109 | 1141 | 1089 | 496 | 670 | 7.0 | 5.6 | 48.9 |
| **X3810** | 145 | 75 | 49 | 1150 | 1109 | 492 | 679 | 7.4 | 6.2 | 51.7 |
| **X3811** | 149 | 92 | 103 | 1211 | 1090 | 544 | 675 | 7.6 | 5.9 | 51.7 |
| **X3813** | 147 | 86 | 82 | 1159 | 1192 | 476 | 688 | 7.9 | 6.0 | 51.7 |
| **X3814** | 150 | 70 | 65 | 1159 | 1114 | 503 | 673 | 8.4 | 7.0 | 53.2 |
| **X3815** | 126 | 54 | 84 | 1132 | 1118 | 481 | 677 | 7.6 | 6.3 | 53.6 |
| **X3816** | 150 | 64 | 86 | 1193 | 986 | 528 | 640 | 7.5 | 5.9 | 52.3 |
| **X3819** | 147 | 98 | 178 | 1218 | 1118 | 544 | 680 | 7.2 | 6.1 | 46.1 |
| **Control 1 (*a)** | 389 | 43 | 103 | 1001 | 405 | 254 | 403 | 4.9 | 3.8 | 50.3 |
| **Control 2 (*b)** | 102 | | | | | | | | | 60.6 |

| | | | | | | | | | | |
|---|---|---|---|---|---|---|---|---|---|---|
| *a: a commercial laminate for ostomy pouch having a PE nonwoven/adhesive/57 um odor barrier film laminate structure, in which the odor barrier film is a five-layer film having a skin layer/tie layer/nylon odor barrier layer/tie layer/heat seal layer construction. *b: a commercial 4-mil multilayer odor barrier film for ostomy pouch including a PVDC barrier layer. ** The film noise levels were measured using a proprietary Hollister test method in A-weighted sound pressure level (SPL (A)). | | | | | | | | | | |

As summarized in Table 6 and Table 8, the seven-layer film samples were relatively thin films having a total thickness of about 124µm (4.9mil) to about 154µm (6.1mil), and including an outer foam layer, an outer seal layer, two inner layers, two tie layer, and a gas barrier layer, in which each of the tie layers comprised a vinyl-bond rich triblock copolymer. For example, some seven-layer film samples included tie layers formed from a polymeric mixture comprising 39% vinyl-bond rich SIS copolymer (Hybrar® 5127), 39% vinyl-bond rich SEPS copolymer (Hybrar® 7125), 20% maleated LLDPE (Bynel® CXA41E710), and 2% antioxidant masterbatch (Preadd® AO 181). These samples include X3747, X3748, X3749, X3750, X3751, X3801, X3804, and X3807, in which each of the tie layers has a thickness of about 13µm (0.5mil) to about 19µm (0.7mil). Other seven-layer film samples included tie layers formed from a polymeric mixture comprising 50% vinyl-bond rich SIS copolymer (Hybrar® 5127), 30% vinyl-bond rich SEPS copolymer (Hybrar® 7125), 18-19% maleated LLDPE (Bynel® CXA41E710), and 1-2% antioxidant masterbatch (Preadd® AO 181). These samples include X3806, X3809, X3810, X3811, X3813, X3814, X3815, X3816, and X3819, in which each of the tie layers has a thickness of about 6µm (0.2mil) to about 18µm (0.7mil). The seven-layer film samples did not include a vinyl-bond rich triblock copolymer other than in the tie layers. In other embodiments, the tie layers maybe formed from a polymeric mixture comprising about 50 wt.% to about 99 wt.% of at least one vinyl-bond rich triblock copolymer, preferably about 60 wt.% to about 90 wt.%, and more preferably about 70 wt.% to about 85 wt.%.

As shown in Table 8, the seven-layer film samples had good mechanical properties as exhibited by Elmendorf tear, tensile strength, and elongation at break test results. Further, the seven-layer film samples had softness suitable for ostomy, packaging and many other similar applications. The seven-layer film samples were tested according to ASTM D882. As summarized in Table 8, the seven-layer film samples had a modulus of between about 5ksi and about 9ksi. In other embodiments, a multilayer film comprising a foam layer, a gas barrier layer, and at least one tie layer formed from a polymeric mixture comprising a vinyl-bond rich triblock copolymer may have a modulus of about 2ksi to about 40ksi, preferably about 4ksi to about 20ksi, and more preferably about 5ksi to about 10ksi.

Further, the seven-layer film samples had relatively low film noise levels of about 45dB to about 54dB(SPL (A)), which is comparable to a commercial laminate material for an ostomy pouch including a multilayer odor barrier film, nonwoven and an adhesive layer therebetween, which has a film noise level of about 50.3dB(SPL (A)). Further, the seven-layer film samples had lower film noise levels than a commercial multilayer odor barrier film having a thickness of about 4 mil(102 µm), which has a film noise level of about 60.6dB(SPL (A)). This is a significant improvement in the sound absorbing property of a film considering that the seven layer samples were about 20% to 50% thicker than the commercial 4 mil odor barrier film, since the noise level of a plastic film is known to increase with the thickness. In other embodiments, a multilayer film comprising a foam layer, a gas barrier layer, and at least one tie layer formed from a polymeric mixture comprising about 50 wt.% to about 99 wt.% of at least one vinyl-bond rich triblock copolymer, and having a thickness of about 120µm to about 160µm may have a film noise level of about 35dB to about 60dB (SPL(A)), and preferably about 45dB to about 55dB(SPL (A)). The film noise levels were measured using a proprietary Hollister test method in A-weighted sound pressure level (SPL (A)).

In the present disclosure, the words "a" or "an" are to be taken to include both the singular and the plural. Conversely, any reference to plural items shall, where appropriate, include the singular. All of the concentrations noted herein as percentage are percent by weight unless otherwise noted. The cross-sectional views of the multilayer film embodiments in the present disclosure drawings are schematic illustrations, in which layer thicknesses are exaggerated for easy understanding and are not proportional.

## Claims

1. A multilayer film including two outer layers, at least one tie layer, at least one inner layer, and a gas barrier layer, wherein the gas barrier layer is arranged between the outer layers, and at least one of the outer layers is a foam layer, wherein the multilayer film has an elastic modulus of about 13.78 MPa (2ksi) to about 275.6 MPa (40ksi) when measured according to ASTM D882, and wherein at least one of the outer foam layer, inner layers, tie layers, and barrier layer comprises a vinyl-bond rich triblock copolymer.

2. The multilayer film of claim 1, wherein the multilayer film is a six-layer film having a seal layer/tie layer/barrier layer/tie layer/inner layer/outer foam layer construction, or a seven-layer film having a seal layer/tie layer/barrier layer/tie layer/inner layer/inner layer/outer foam layer construction, or a seven-layer film having a seal layer/inner layer/tie layer/barrier layer/tie layer/inner layer/outer foam layer construction, or a six-layer film having a seal layer/inner layer/tie layer/barrier layer/tie layer/outer foam layer construction, or a five-layer film having a seal layer/tie layer/barrier layer/tie layer/outer foam layer construction.

3. The multilayer film of claim 2, wherein at least one of the inner layers is a foam layer.

4. The multilayer film of claim 1, wherein the outer foam layer is formed from a polymer selected from ethylene vinyl acetate (EVA), ethylene methyl acrylate (EMA), ethylene alpha olefin copolymers, ethylene based elastomers, ethylene-propylene (EP) copolymers, and blends thereof, and a foaming agent.

5. The multilayer film of claim 1, wherein the gas barrier layer comprises a polymer selected from polyvinylidene chloride, vinylidene copolymer, polyamide, and ethylene-vinyl alcohol copolymer.

6. The multilayer film of claim 5, wherein the gas barrier layer is formed from a polymer blend comprising an amorphous polyamide and a functionalized rubber blend or compound.

7. The multilayer film of claim 1, wherein the multilayer film has a thickness of 100µm to 500µm.

8. The multilayer film of claim 1, wherein the at least one tie layer is formed from a polymeric mixture comprising at least one vinyl-bond rich triblock copolymer.

9. The multilayer film of claim 8, wherein the polymeric mixture comprises 50 wt.% to 99 wt.% of at least one vinyl-bond rich triblock copolymer.

10. The multilayer film of claim 9, wherein the polymeric mixture comprises a vinyl-bond rich SIS block copolymer and a vinyl-bond rich SEPS block copolymer.

11. The multilayer film of claim 10, wherein the polymeric mixture comprises 25 wt.% to 60 wt.% vinyl-bond rich SIS block copolymer, 25 wt.% to 60 wt.% vinyl-bond rich SEPS block copolymer, 1 wt.% to 40 wt.% maleated LLDPE, and 0 wt.% to 5 wt.% antioxidant masterbatch.

12. The multilayer film of any of claims 8-11, wherein the multilayer film is a seven layer film having a foam layer/inner layer/tie layer/gas barrier layer/tie layer/inner layer/seal layer configuration.

13. An ostomy pouch, comprising a first wall, a second wall, wherein the first wall and the second wall are sealed along their peripheral edges to define a cavity; and wherein at least one of the first wall and the second wall is formed from the multilayer film of any of claims 8-12.

## Patentansprüche

1. Mehrschichtige Folie mit zwei Außenschichten, zumindest einer Verbindungsschicht, zumindest einer Innenschicht und einer Gassperrschicht, wobei die Gassperrschicht zwischen den Außenschichten angeordnet ist und zumindest eine der Außenschichten eine Schaumstoffschicht ist, wobei die mehrschichtige Folie ein Elastizitätsmodul von etwa 13,78 MPa (2 ksi) bis etwa 275,6 MPa (40 ksi) aufweist, wenn nach ASTM D882 gemessen, und wobei zumindest eine von der Schaumstoffaußenschicht, den Innenschichten, den Verbindungsschichten und der Sperrschicht ein vinylbindungsreiches Triblock-Copolymer umfasst.

2. Mehrschichtige Folie nach Anspruch 1, wobei die mehrschichtige Folie eine sechsschichtige Folie, die eine Konstruktion aus Dichtungsschicht/Verbindungsschicht/Sperrschicht/Verbindungssc hicht/Innenschicht/Schaumstoffaußenschicht aufweist, oder eine siebenschichtige Folie, die eine Konstruktion aus Dichtungsschicht/Verbindungsschicht/Sperrschicht/Verbindungssc hicht/Innenschicht/Innenschicht/Schaumstoffaußenschicht aufweist, oder eine siebenschichtige Folie, die eine Konstruktion aus Dichtungsschicht/Innenschicht/Verbindungsschicht/Sperrschicht/ Verbindungsschicht/Innenschicht/Schaumstoffaußenschicht aufweist, oder eine sechsschichtige Folie, die eine Konstruktion aus Dichtungsschicht/Innenschicht/Verbindungsschicht/Sperrschicht/ Verbindungsschicht/Schaumstoffaußenschicht aufweist, oder eine fünfschichtige Folie ist, die eine Konstruktion aus Dichtungsschicht/Verbindungsschicht/Sperrschicht/Verbindungssc hicht/Schaumstoffaußenschicht aufweist.

3. Mehrschichtige Folie nach Anspruch 2, wobei zumindest eine der Innenschichten eine Schaumstoffschicht ist.

4. Mehrschichtige Folie nach Anspruch 1, wobei die Schaumstoffaußenschicht aus einem Polymer, das aus Ethylenvinylacetat (EVA), Ethylenmethylacrylat (EMA), Ethylenalpha-Olefin-Copolymeren, ethylenbasierten Elastomeren, Ethylen-Propylen-(EP-)Copolymeren und Mischungen davon ausgewählt ist, und einem Schäumungsmittel gebildet ist.

5. Mehrschichtige Folie nach Anspruch 1, wobei die Gassperrschicht ein Polymer umfasst, das aus Polyvinylidenchlorid, Vinyliden-Copolymer, Polyamid und Ethylen-Vinylalkohol-Copolymer ausgewählt ist.

6. Mehrschichtige Folie nach Anspruch 5, wobei die Gassperrschicht aus einer Polymermischung gebildet ist, die ein amorphes Polyamid und eine funktionalisierte Kautschukmischung oder -verbindung umfasst.

7. Mehrschichtige Folie nach Anspruch 1, wobei die mehrschichtige Folie eine Dicke von 100 µm bis 500 µm aufweist.

8. Mehrschichtige Folie nach Anspruch 1, wobei die zumindest eine Verbindungsschicht aus einem Polymergemisch gebildet ist, das zumindest ein vinylbindungsreiches Triblock-Copolymer umfasst.

9. Mehrschichtige Folie nach Anspruch 8, wobei das Polymergemisch 50 Gew.-% bis 99 Gew.-% von zumindest einem vinylbindungsreichen Triblock-Copolymer umfasst.

10. Mehrschichtige Folie nach Anspruch 9, wobei das Polymergemisch ein vinylbindungsreiches SIS-Block-Copolymer und ein vinylbindungsreiches SEPS-Block-Copolymer umfasst.

11. Mehrschichtige Folie nach Anspruch 10, wobei das Polymergemisch 25 Gew.-% bis 60 Gew.-% vinylbindungsreiches SIS-Block-Copolymer, 25 Gew.-% bis 60 Gew.-% vinylbindungsreiches SEPS-Block-Copolymer, 1 Gew.-% bis 40 Gew.-% maleiertes LLDPE und 0 Gew.-% bis 5 Gew.-% Antioxidans-Masterbatch umfasst.

12. Mehrschichtige Folie nach einem von Anspruch 8-11, wobei die mehrschichtige Folie eine siebenschichtige Folie ist, die eine Konfiguration aus Schaumstoffschicht/Innenschicht/Verbindungsschicht/Gassperrsch icht/Verbindungsschicht/Innenschicht/Dichtungsschicht aufweist.

13. Ostomiebeutel, umfassend eine erste Wand, eine zweite Wand, wobei die erste Wand und die zweite Wand entlang ihrer Umfangskanten abgedichtet sind, um einen Hohlraum zu definieren; und wobei zumindest eine von der ersten Wand und der zweiten Wand aus der mehrschichtigen Folie nach einem von Anspruch 8-12 gebildet ist.

## Revendications

1. Film multicouche comprenant deux couches extérieures, au moins une couche de liaison, au moins une couche intérieure et une couche formant barrière contre les gaz, dans lequel la couche formant barrière contre les gaz est agencée entre les couches extérieures, et au moins l'une des couches extérieures est une couche de mousse, dans lequel le film multicouche présente un module élastique d'au moins 13,78 MPa (2 ksi) à environ 275,6 MPa (40 ksi) quand il est mesuré en fonction de ASTM D882, et dans lequel au moins l'une de la couche de mousse extérieure, des couches intérieures, des couches de liaison et de la couche formant barrière comprend un copolymère tribloc riche en liaisons vinyle.

2. Film multicouche selon la revendication 1, dans lequel le film multicouche est un film à six couches présentant une construction à couche d'étanchéité/couche de liaison/couche formant barrière/couche de liaison/couche intérieure/couche de mousse extérieure, ou un film à sept couches présentant une construction à couche d'étanchéité/couche de liaison/couche formant barrière/couche de liaison/couche intérieure/couche intérieure/couche de mousse extérieure, ou un film à sept couches présentant une construction à couche d'étanchéité/couche intérieure/couche de liaison/couche formant barrière/couche de liaison/couche intérieure/couche de mousse extérieure, ou un film à six couches présentant une construction à couche d'étanchéité/couche intérieure/couche de liaison/couche formant barrière/couche de liaison/ couche de mousse extérieure, ou un film à cinq couches présentant une construction à couche d'étanchéité/couche de liaison/couche formant barrière/couche de liaison/ couche de mousse extérieure.

3. Film multicouche selon la revendication 2, dans lequel au moins l'une des couches intérieures est une couche de mousse.

4. Film multicouche selon la revendication 1, dans lequel la couche de mousse extérieure est formée à partir d'un polymère sélectionné parmi l'éthylène-acétate de vinyle (EVA), l'éthylène-acrylate de vinyle (EMA), des copolymères d'éthylène-alpha oléfine, des élastomères à base d'éthylène, des copolymères d'éthylène-propylène (EP), et des mélanges de ceux-ci, et d'un agent moussant.

5. Film multicouche selon la revendication 1, dans lequel la couche formant barrière contre les gaz comprend un polymère sélectionné parmi du polychlorure de vinylidène, un copolymère de vinylidène, du polyamide, et un copolymère d'éthylène-alcool de vinyle.

6. Film multicouche selon la revendication 5, dans lequel la couche formant barrière contre les gaz est formée à partir d'un mélange de polymères comprenant un polyamide amorphe et un mélange ou composé caoutchouteux fonctionnalisé.

7. Film multicouche selon la revendication 1, dans lequel le film multicouche présente une épaisseur de 100 µm à 500 µm.

8. Film multicouche selon la revendication 1, dans lequel l'au moins une couche de liaison est formée à partir d'un mélange polymère comprenant au moins un copolymère tribloc riche en liaisons vinyle.

9. Film multicouche selon la revendication 8, dans lequel le mélange polymère comprend de 50 % en poids à 99 % en poids d'au moins un copolymère tribloc riche en liaisons vinyle.

10. Film multicouche selon la revendication 9, dans lequel le mélange polymère comprend un copolymère séquencé SIS riche en liaisons vinyle et un copolymère séquencé SEPS riche en liaisons vinyle.

11. Film multicouche selon la revendication 10, dans lequel le mélange polymère comprend de 25 % en poids à 60 % en poids de copolymère séquencé SIS riche en liaisons vinyle, de 25 % en poids à 60 % en poids de copolymère séquencé SEPS riche en liaisons vinyle, de 1 % en poids à 40 % en poids de LLDPE maléaté, et de 0 % en poids à 5 % en poids de mélange-maître antioxydant.

12. Film multicouche selon l'une quelconque des revendications 8 à 11, dans lequel le film multicouche est un film à sept couches présentant une configuration à couche de mousse/couche intérieure/couche de liaison/couche formant barrière contre les gaz/couche de liaison/couche intérieure/couche d'étanchéité.

13. Poche de stomie, comprenant une première paroi, une seconde paroi, dans laquelle la première paroi et la seconde paroi sont rendues étanches le long de leurs bords périphériques pour définir une cavité ; et dans laquelle au moins l'une de la première paroi et de la seconde paroi est formée à partir du film multicouche selon l'une quelconque des revendications 8-12.
